(19) Europäisches Patentamt
European Patent Office
Office européen des brevets

(11) **EP 4 300 038 A1**

(12) **EUROPEAN PATENT APPLICATION**
published in accordance with Art. 153(4) EPC

(43) Date of publication:
**03.01.2024 Bulletin 2024/01**

(21) Application number: **22759139.3**

(22) Date of filing: **13.01.2022**

(51) International Patent Classification (IPC):
*G01C 3/06* (2006.01)        *H04N 19/597* (2014.01)
*H04N 19/94* (2014.01)        *G01S 7/4915* (2020.01)

(52) Cooperative Patent Classification (CPC):
**G01C 3/06; G01S 7/4915; H04N 19/597;
H04N 19/94**

(86) International application number:
**PCT/JP2022/000817**

(87) International publication number:
**WO 2022/181096 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.02.2021  JP 2021029716**

(71) Applicant: **Sony Semiconductor Solutions
Corporation
Atsugi-shi, Kanagawa 243-0014 (JP)**

(72) Inventors:
• **KITAMURA Takuya
Atsugi-shi, Kanagawa 243-0014 (JP)**
• **NAGUMO Takefumi
Atsugi-shi, Kanagawa 243-0014 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE AND METHOD**

(57)     The present disclosure relates to an information processing device and an information processing method achieving suppression of a drop of coding efficiency.

A depth value that wraps around a predetermined value range is quantized by using a predetermined quantization step. A difference value between the quantized depth value and a predicted value of the depth value is derived. A turnback value of the depth value is quantized by using the quantization step. The derived difference value is appropriately corrected by using the quantized turnback value. The appropriately corrected difference value is coded. For example, the present disclosure is applicable to an information processing device, an image processing device, electronic equipment, an information processing method, an image processing method, a program, or others.

FIG.9

EP 4 300 038 A1

## Description

[Technical Field]

The present disclosure relates to an information processing device and an information processing method, and particularly to an information processing device and an information processing method capable of suppressing a drop of coding efficiency.

[Background Art]

Use of image sensors for sensing has been increasing in recent years. For example, there has been developed a technology which measures a distance from a target object by detecting a phase difference between a sine wave applied from a light source and a reflected wave (e.g., see NPL 1).

According to such a type of distance measuring method, more accurate distance measurement is achievable without reduction of a maximum measurement distance, with use of light of multiple modulation frequencies for distance measurement. In the case of distance measurement using multiple modulation frequencies as described above, a distance measurement result (depth value) wraps around a predetermined value range when obtained by using light having a high modulation frequency.

For coding such a depth value, there has been a method which derives a difference between a depth value of a processing target and a predicted value of the depth value and codes a difference value thus derived, such as a method of DPCM (Differential Pulse Code Modulation). Meanwhile, there has been a method which utilizes wrapping around to suppress a drop of data coding efficiency (e.g., see PTL 1 and PTL 2).

[Citation List]

[Non Patent Literature]

[NPL 1]
Keita Yasutomi, Shoji Kawahito "Technical Description Time-of-Flight Camera," The Journal of the Institute of Image Information and Television Engineers, 2016, Vol. 70, No. 11, pp. 880-885, accepted August 29, 2016

[Patent Literature]

[PTL 1]
Japanese Patent No. 6045123
[PTL 2]
Japanese Patent Laid-open No. 2002-344477

[Summary]

[Technical Problem]

However, if the foregoing method which derives a difference between a depth value and a predicted value of the depth value and codes a difference value thus derived is adopted as the method for coding a depth value which wraps around as described above, the difference value increases due to wrapping around of the depth value. As a result, coding efficiency may drop. Meanwhile, each of the methods recited in PTL 1 and PTL 2 utilizes wrapping around of a difference value and coded data to limit these within a predetermined value range. Accordingly, a drop of coding efficiency of wraparound data is difficult to suppress.

The present disclosure has been developed in consideration of such circumstances and achieves suppression of a drop of coding efficiency.

[Solution to Problem]

An information processing device according to one aspect of the present technology includes a first quantization unit that quantizes a depth value that wraps around a predetermined value range, by using a predetermined quantization step, a difference value derivation unit that derives a difference value between the depth value quantized by the first quantization unit and a predicted value of the depth value, a second quantization unit that quantizes a turnback value of the depth value by using the quantization step, a correction unit that appropriately corrects, by using the turnback value quantized by the second quantization unit, the difference value derived by the difference value derivation unit, and a coding unit that codes the difference value appropriately corrected by the correction unit.

An information processing method according to one aspect of the present technology includes quantizing a depth value that wraps around a predetermined value range, by using a predetermined quantization step, deriving a difference value between the quantized depth value and a predicted value of the depth value, quantizing a turnback value of the depth value by using the quantization step, appropriately correcting the derived difference value by using the quantized turnback value, and coding the appropriately corrected difference value.

An information processing device according to another aspect of the present technology includes a decoding unit that decodes coded data to derive a difference value between coefficient data associated with a depth value wrapping around a predetermined value range, and a predicted value of the coefficient data, a coefficient data derivation unit that adds the predicted value to the difference value derived by the decoding unit, to derive the coefficient data, a quantization unit that quantizes a turnback value of the depth value by using a predetermined quantization step, a correction unit that appropriately corrects, by using the turnback value quantized by the quantization unit, the coefficient data derived by the coefficient data derivation unit, and an inverse quantization unit that inversely quantizes, by using the quantization step, the coefficient data appropriately corrected by the correction unit, to derive the depth value.

An information processing method according to another aspect of the present technology includes decoding coded data to derive a difference value between coefficient data associated with a depth value wrapping around a predetermined value range, and a predicted value of the coefficient data, adding the predicted value to the derived difference value to derive the coefficient data, quantizing a turnback value of the depth value by using a predetermined quantization step, appropriately correcting the derived coefficient data by using the quantized turnback value, and inversely quantizing the appropriately corrected coefficient data by using the quantization step to derive the depth value.

According to the information processing device and the information processing method of the one aspect of the present technology, a depth value that wraps around a predetermined value range is quantized by using a predetermined quantization step. A difference value between the quantized depth value and a predicted value of the depth value is derived. A turnback value of the depth value is quantized by using the quantization step. The derived difference value is appropriately corrected by using the quantized turnback value. The appropriately corrected difference value is coded.

According to the information processing device and the information processing method of the other aspect of the present technology, coded data is decoded to derive a difference value between coefficient data associated with a depth value wrapping around a predetermined value range, and a predicted value of the coefficient data. The predicted value is added to the derived difference value to derive the coefficient data. A turnback value of the depth value is quantized by using a predetermined quantization step. The derived coefficient data is appropriately corrected by using the quantized turnback value. The appropriately corrected coefficient data is inversely quantized by using the quantization step to derive the depth value.

[Brief Description of Drawings]

[FIG. 1]

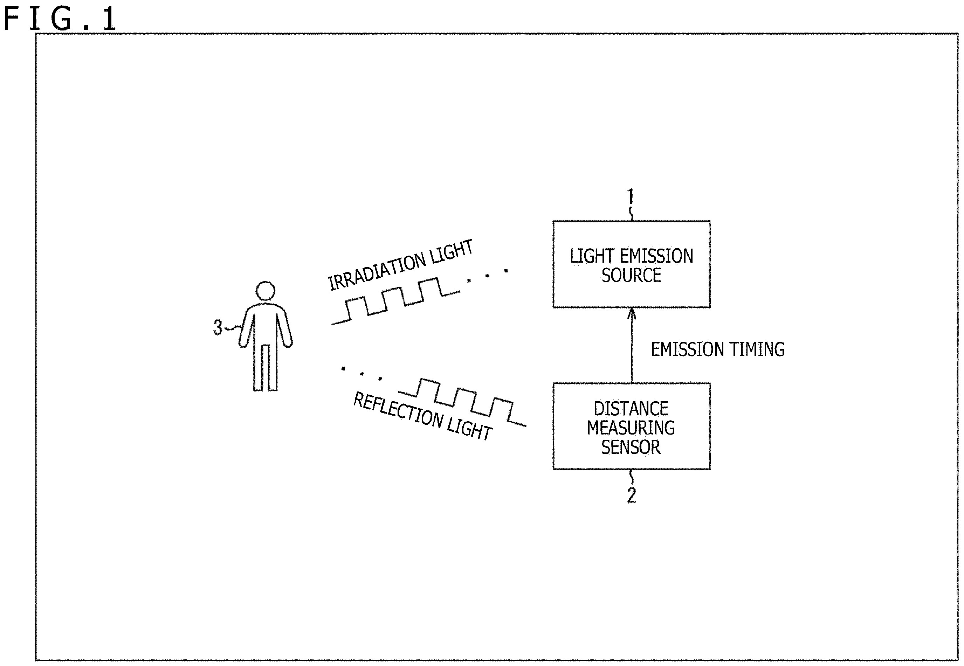

FIG. 1 is a diagram explaining an example of a state of distance measurement by an indirect ToF method.
[FIG. 2]

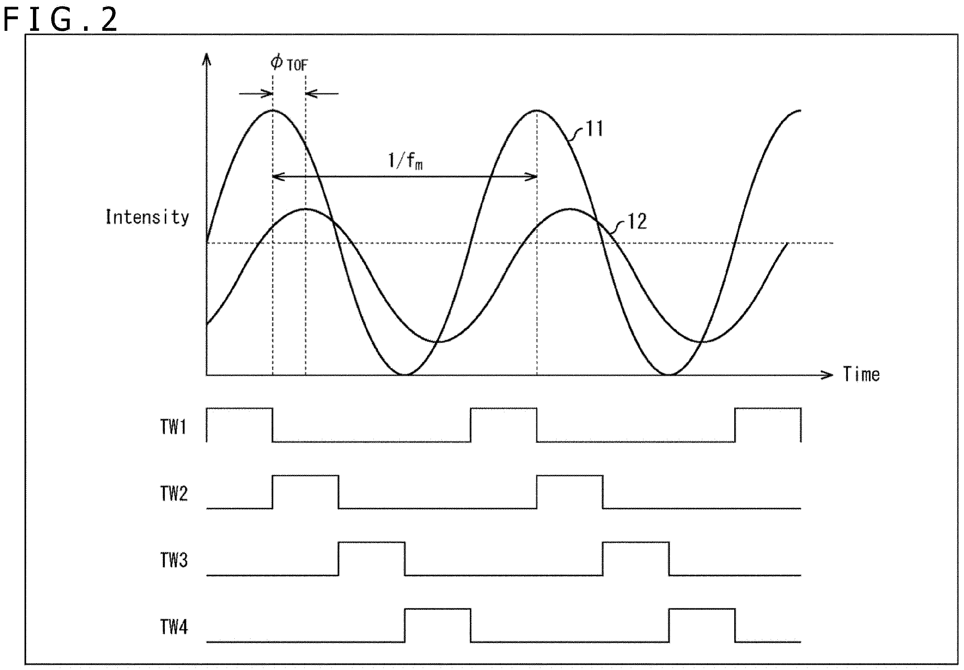

FIG. 2 is a diagram explaining an example of a state of distance measurement by an indirect ToF method.
[FIG. 3]

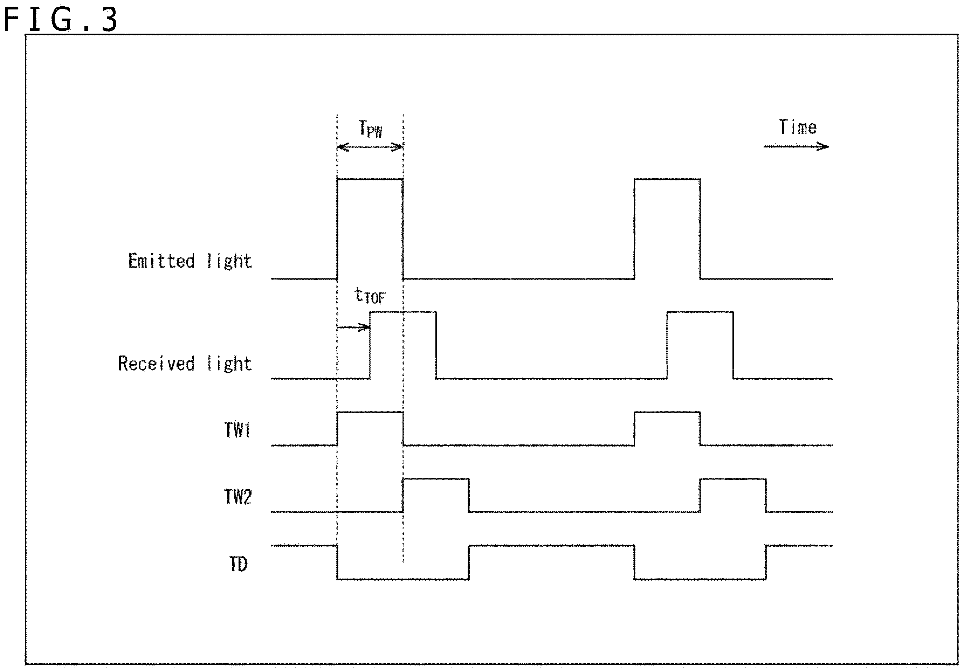

FIG. 3 is a diagram explaining an example of a state of distance measurement by an indirect ToF method.

[FIG. 4]

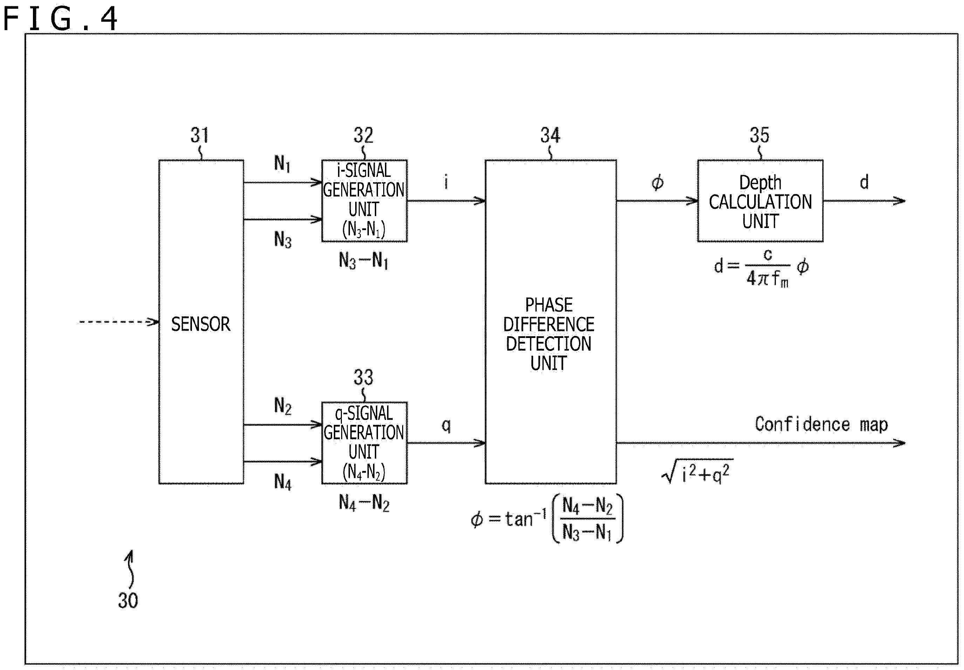

FIG. 4 is a diagram explaining an example of a state of distance measurement by an indirect ToF method.
[FIG. 5]

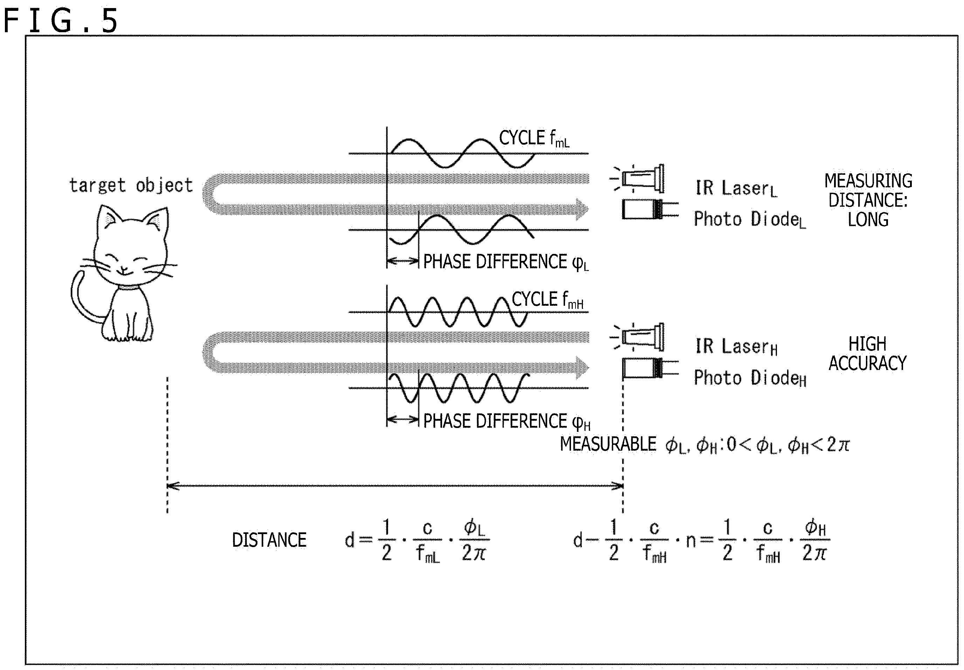

FIG. 5 is a diagram explaining an example of a state of distance measurement by an indirect ToF method using multiple modulation frequencies.
[FIG. 6]

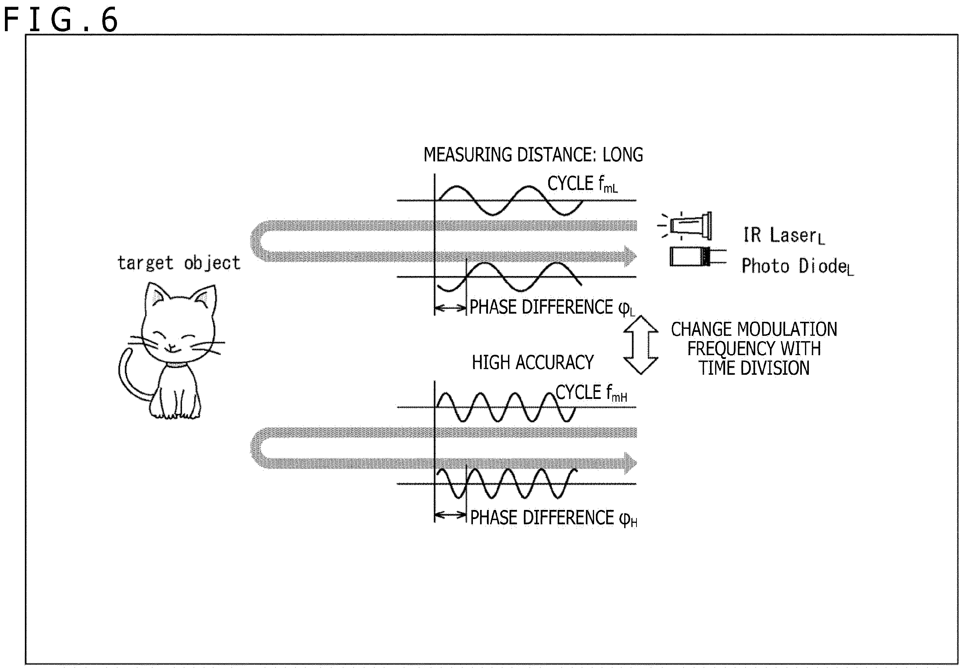

FIG. 6 is a diagram explaining an example of a state of distance measurement by an indirect ToF method using multiple modulation frequencies.
[FIG. 7]

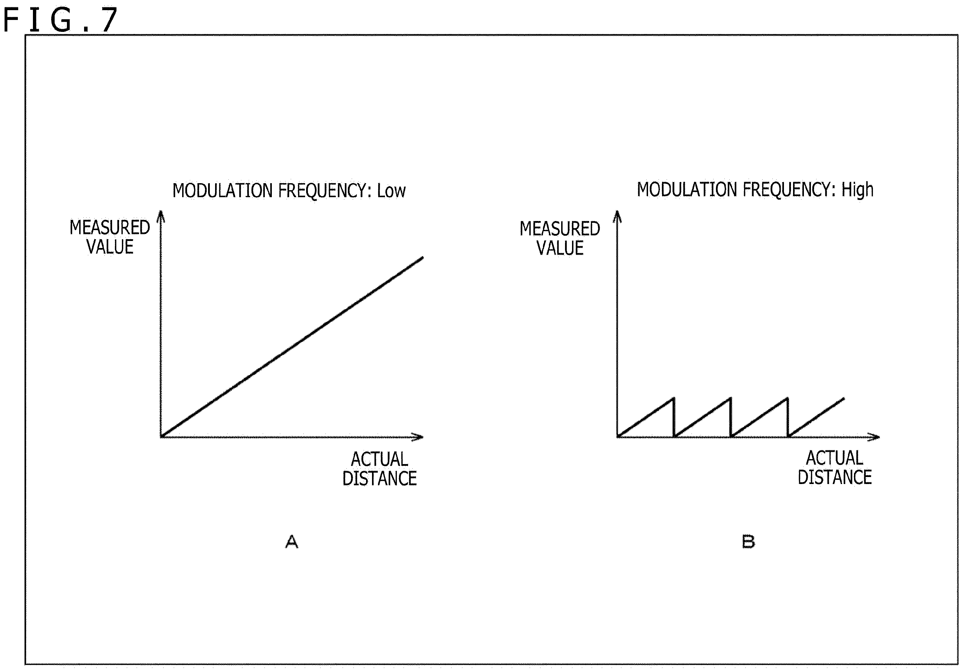

FIG. 7 is a diagram explaining an example of a measured value.
[FIG. 8]

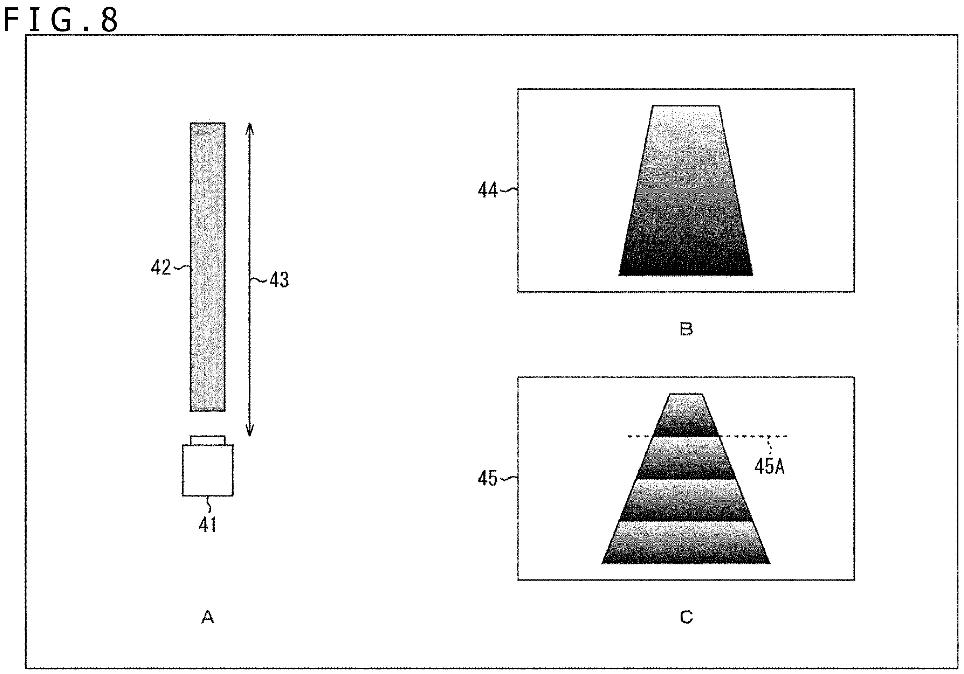

FIG. 8 is a diagram explaining an example of a measured value.
[FIG. 9]

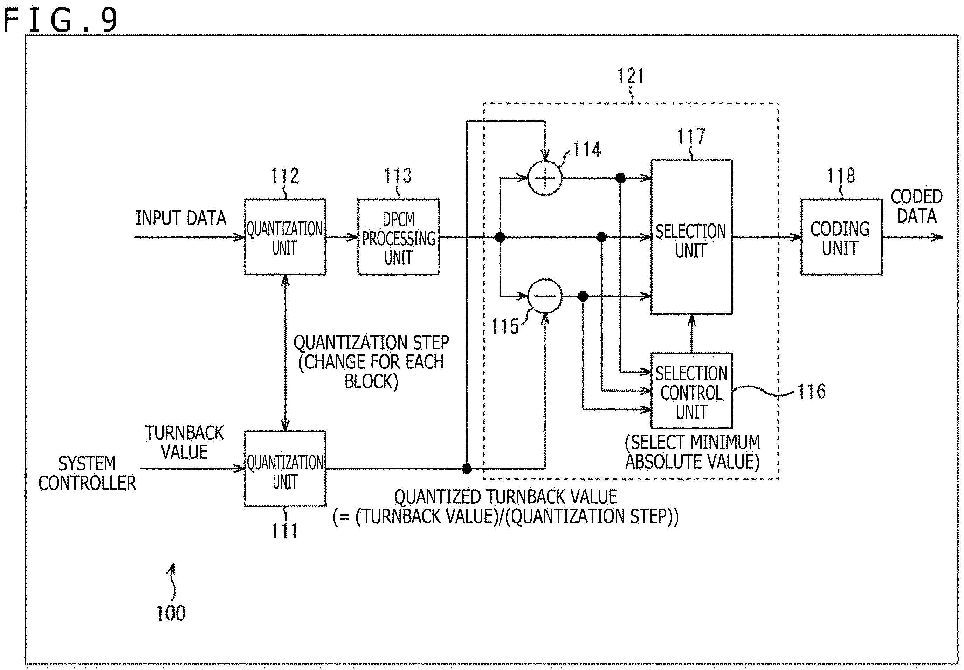

FIG. 9 is a block diagram depicting an example of a main configuration of a coding device.
[FIG. 10]

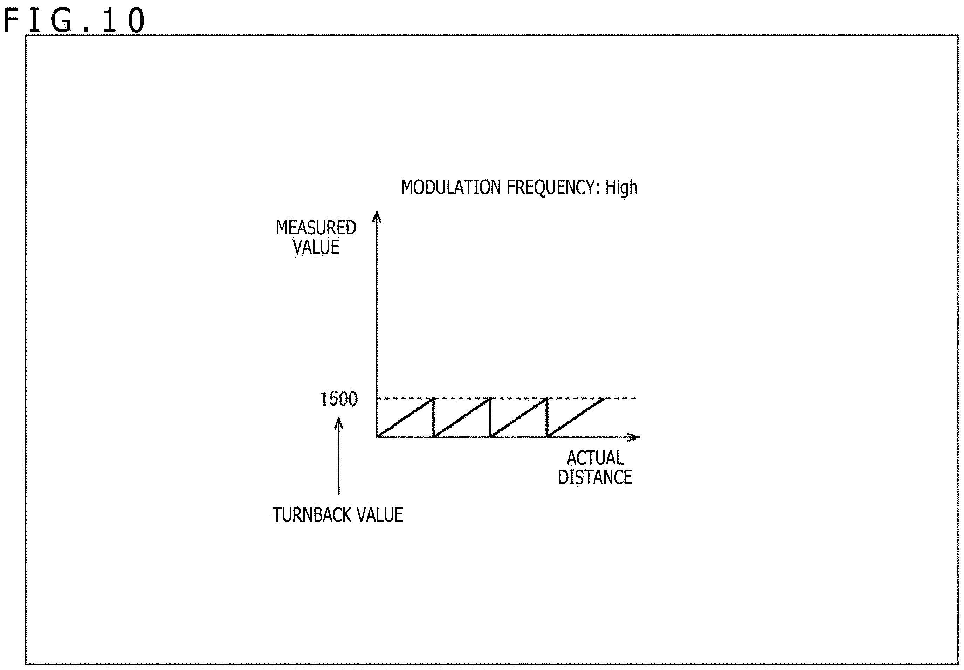

FIG. 10 is a diagram explaining a turnback value.
[FIG. 11]

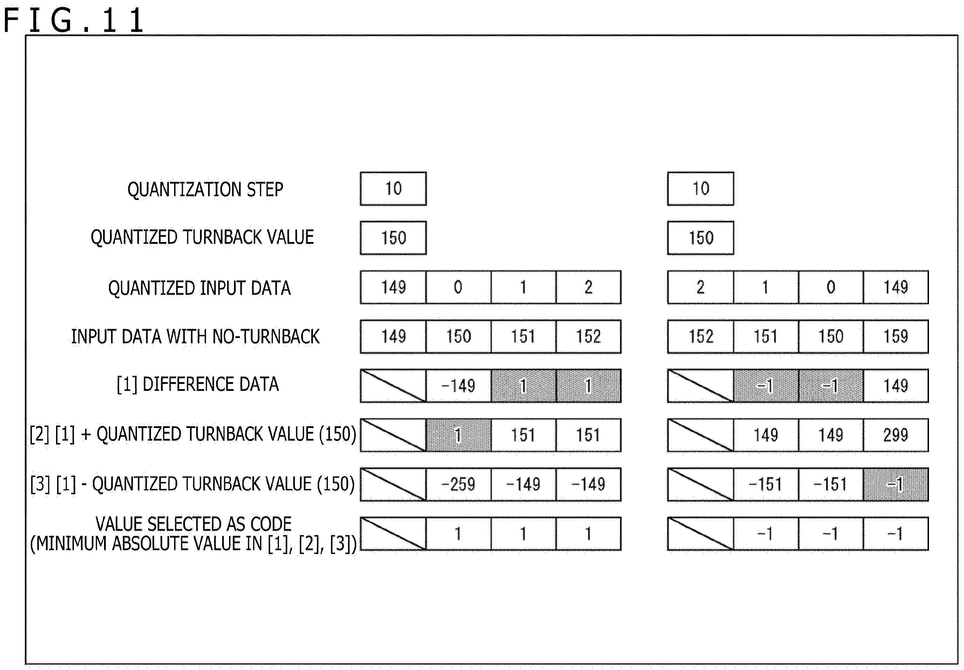

FIG. 11 is a diagram explaining an example of a state of correction of difference values.
[FIG. 12]

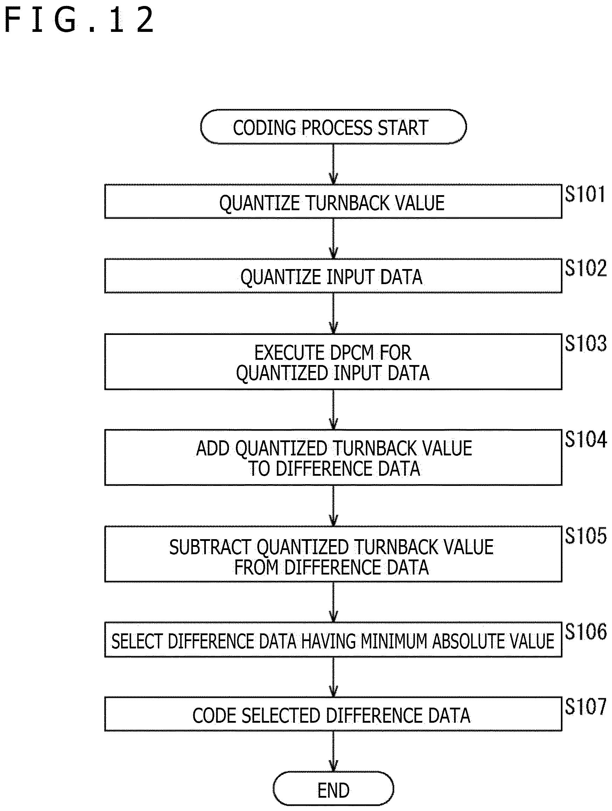

FIG. 12 is a flowchart illustrating an example of a flow of a coding process.
[FIG. 13]

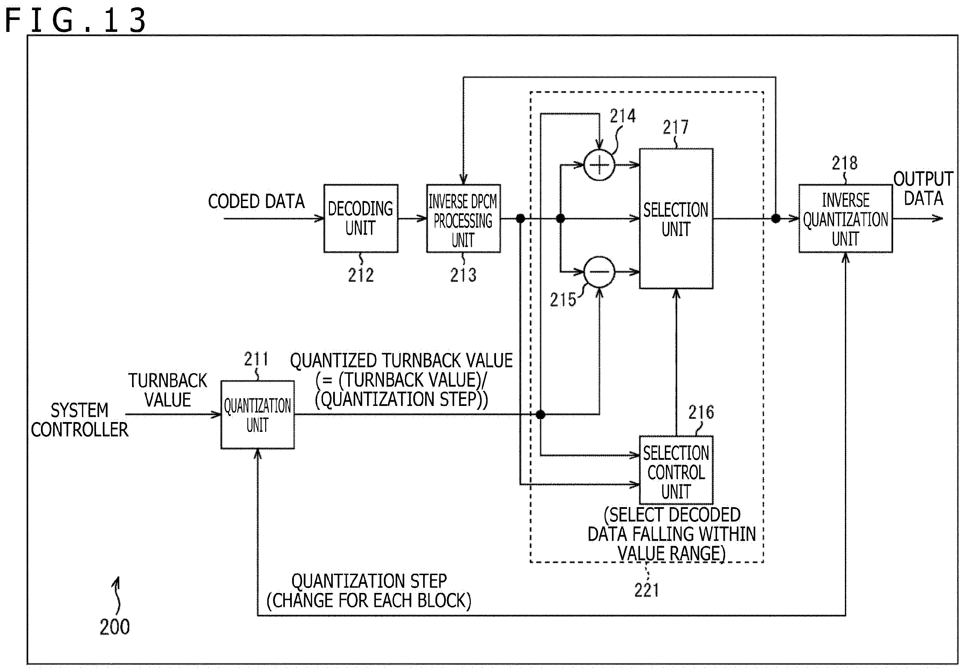

FIG. 13 is a block diagram depicting an example of a main configuration of a decoding device.
[FIG. 14]

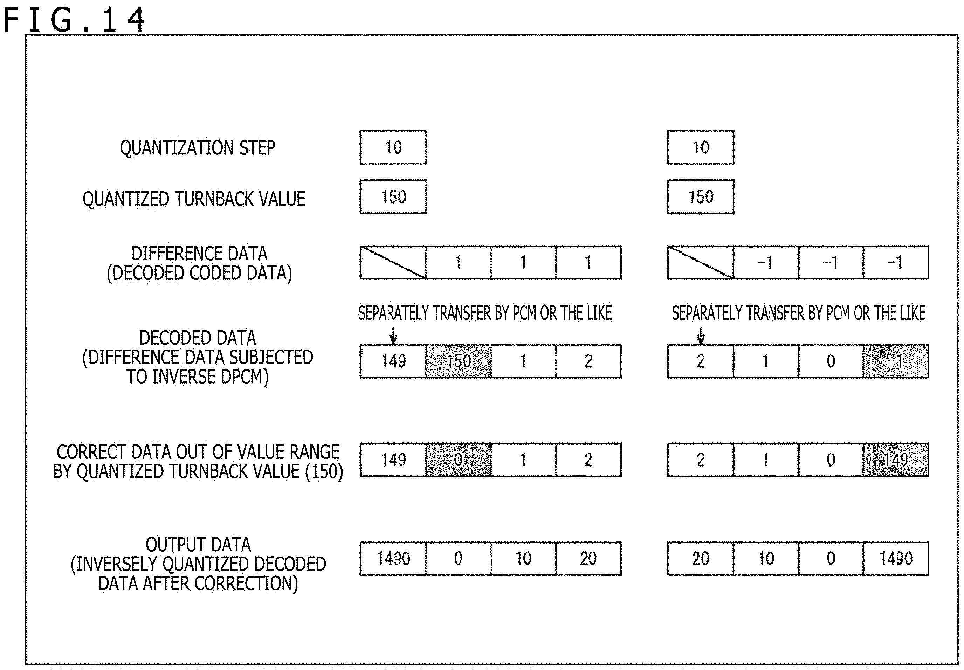

FIG. 14 is a diagram explaining an example of a state of correction of decoded data.
[FIG. 15]

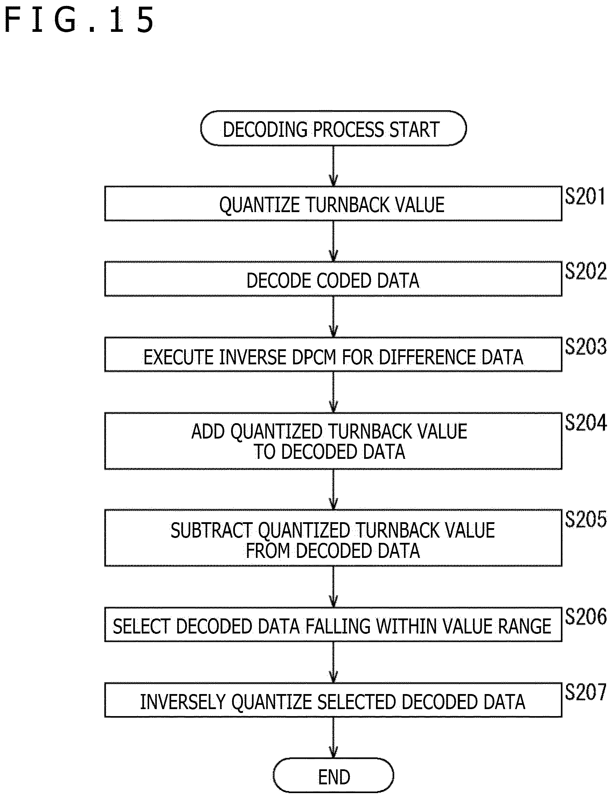

FIG. 15 is a flowchart illustrating an example of a flow of a decoding process.
[FIG. 16]

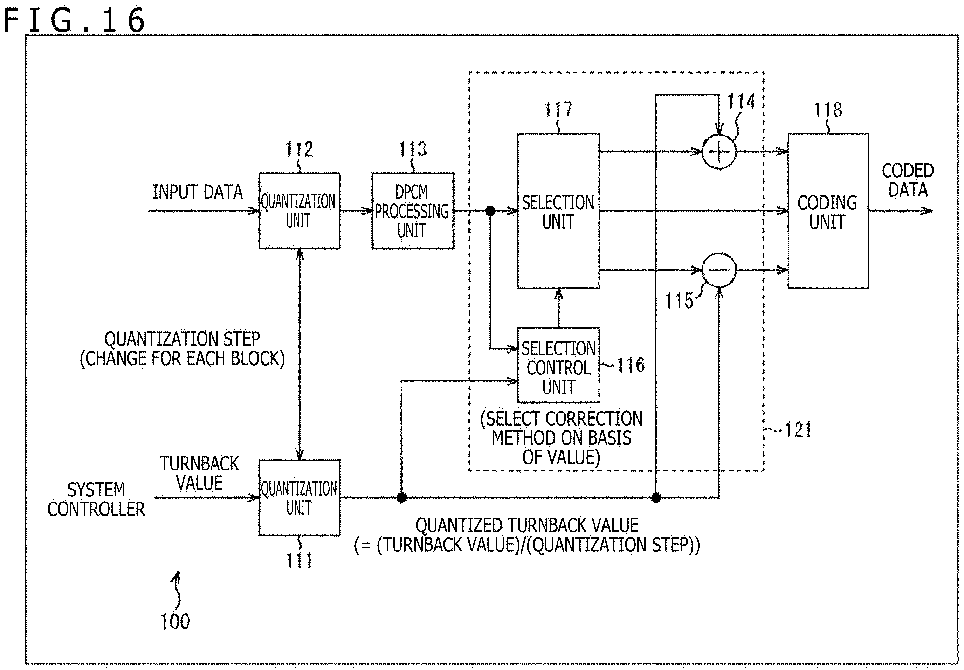

FIG. 16 is a block diagram depicting an example of a main configuration of a coding device.
[FIG. 17]

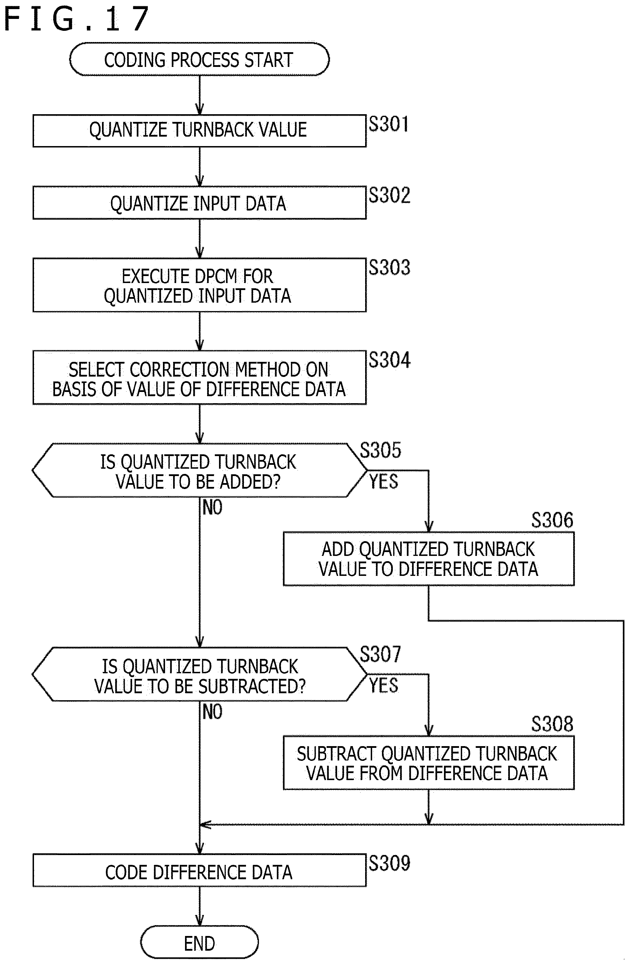

FIG. 17 is a flowchart illustrating an example of a flow of a coding process.
[FIG. 18]

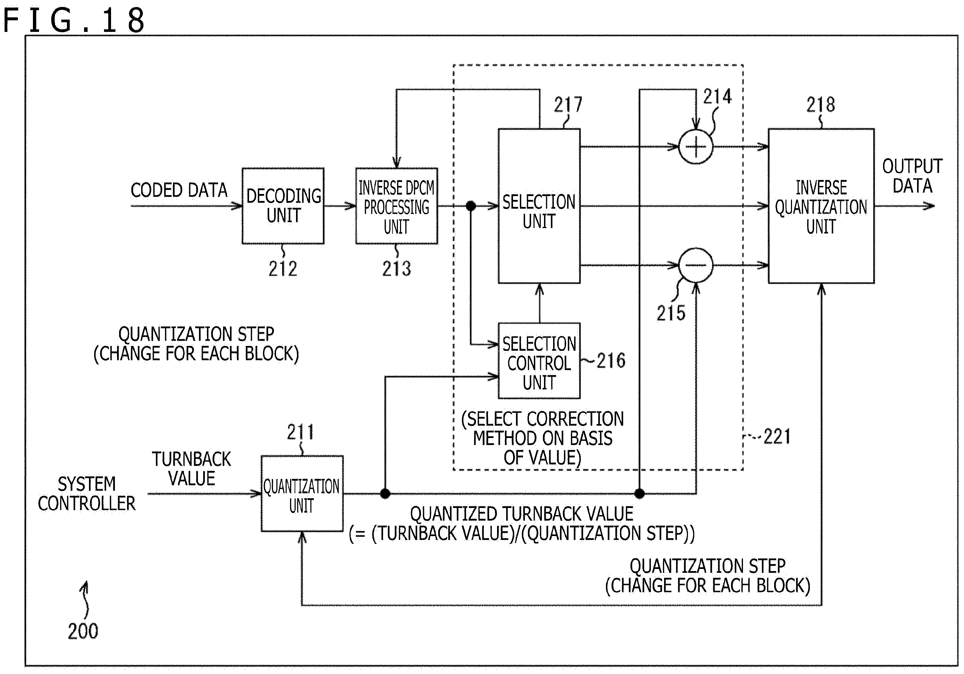

FIG. 18 is a block diagram depicting an example of a main configuration of a decoding device.
[FIG. 19]

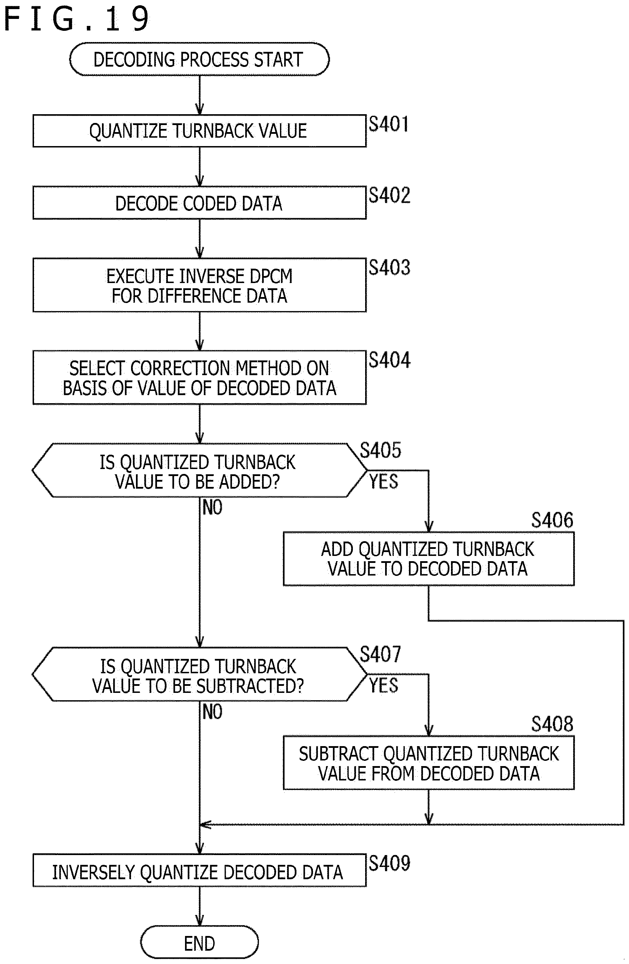

FIG. 19 is a flowchart illustrating an example of a flow of a decoding process.
[FIG. 20]

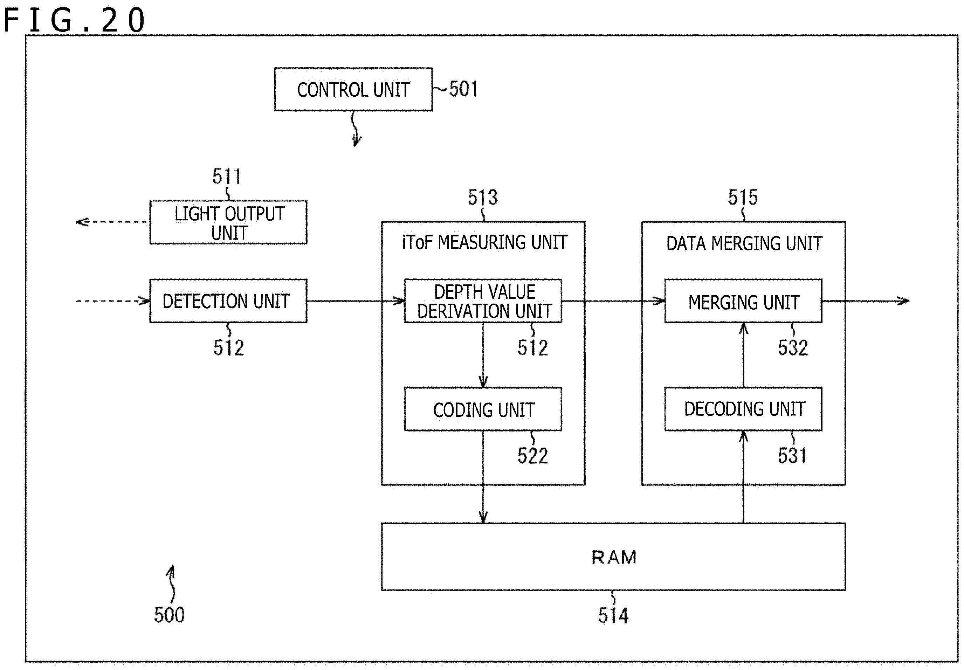

FIG. 20 is a block diagram depicting an example of a main configuration of a distance measuring device.
[FIG. 21]

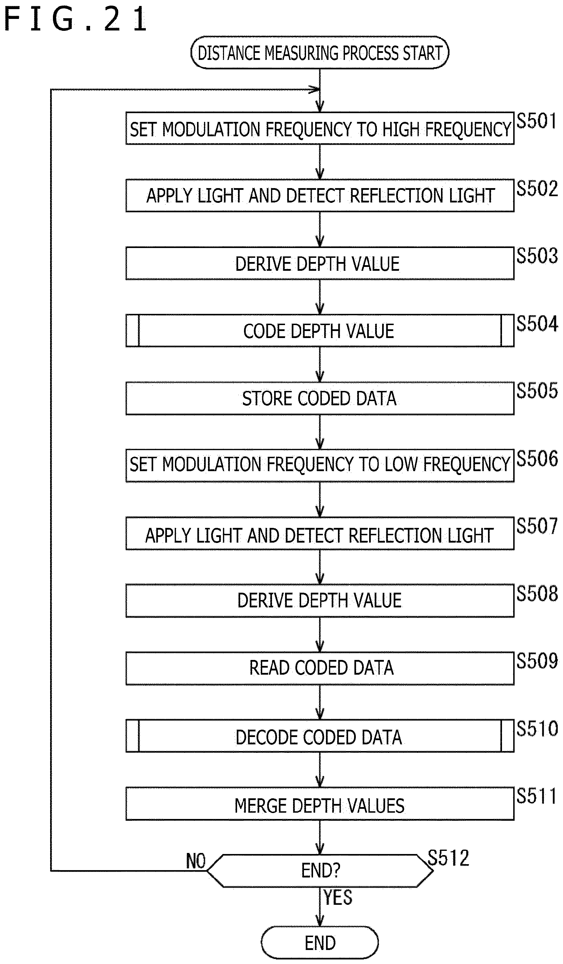

FIG. 21 is a flowchart illustrating an example of a flow of a distance measuring process.
[FIG. 22]

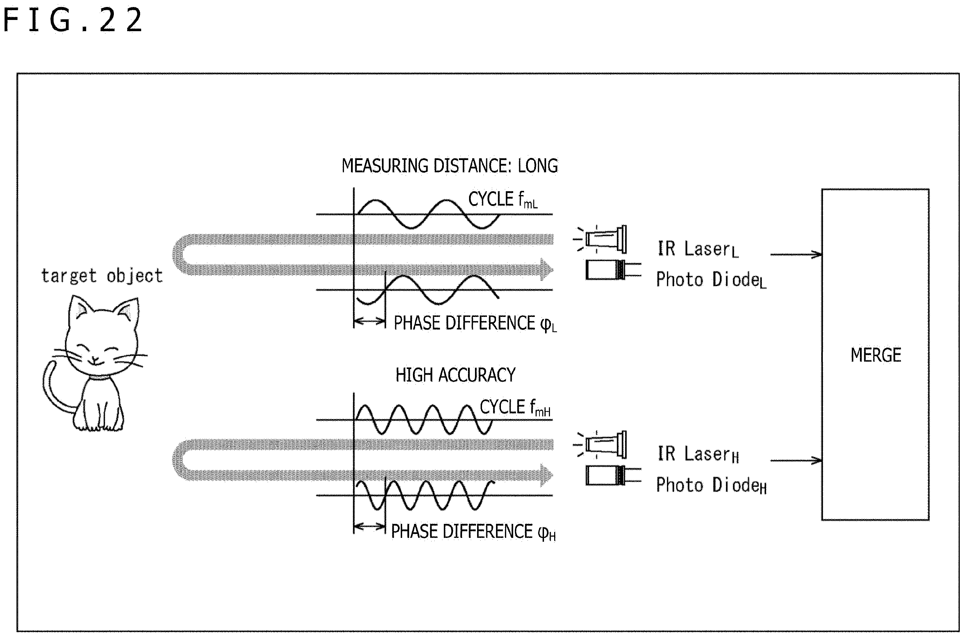

FIG. 22 is a diagram explaining an example of a state of distance measurement by an indirect ToF method using multiple modulation frequencies.

[FIG. 23]

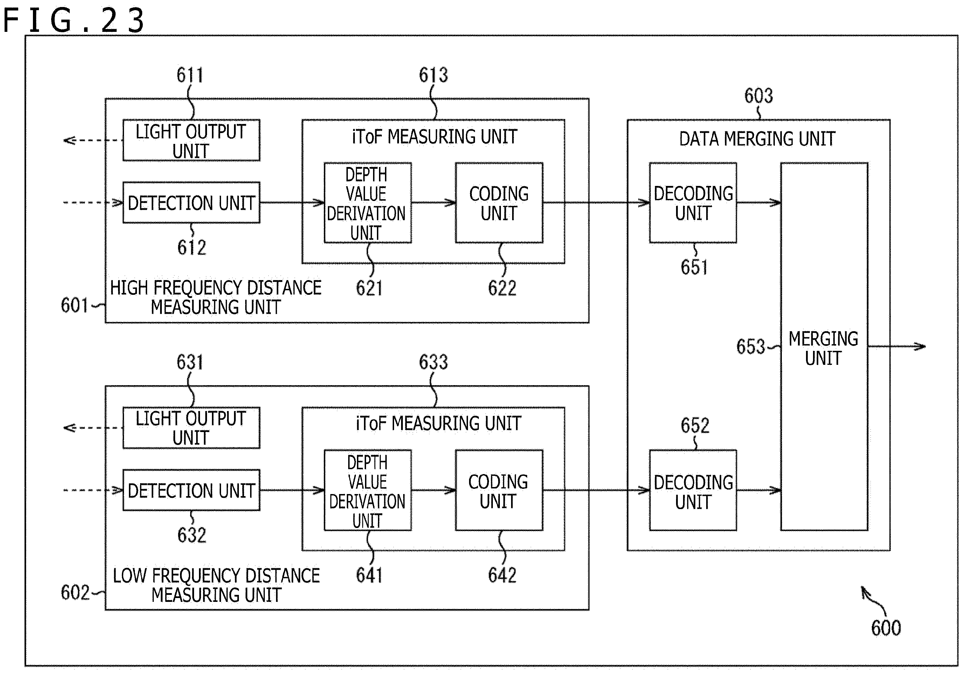

FIG. 23 is a block diagram depicting an example of a main configuration of a distance measuring device.
[FIG. 24]

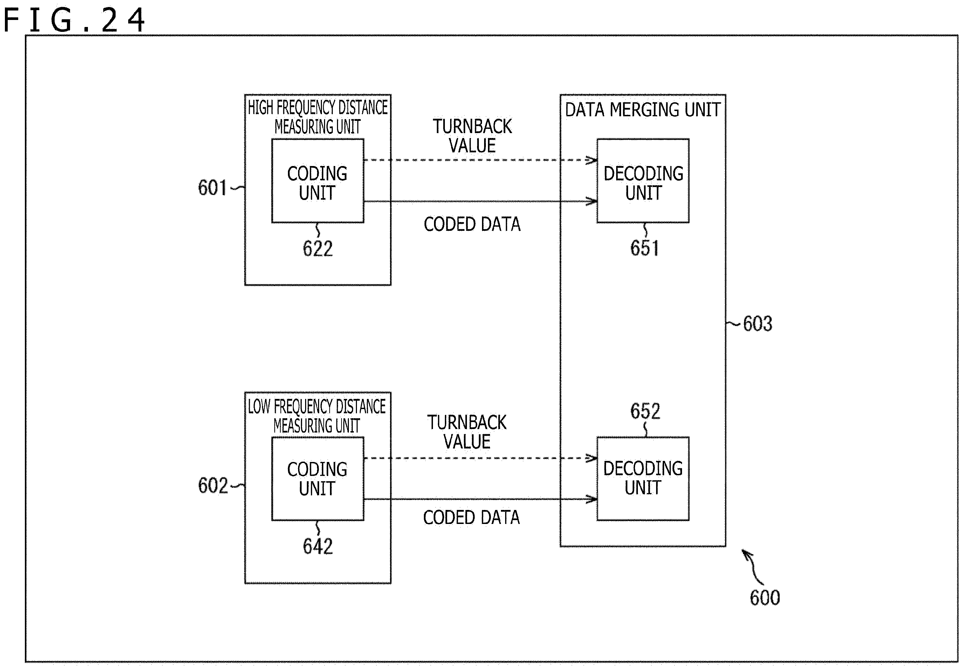

FIG. 24 is a diagram explaining an example of a state of supply of turnback values.
[FIG. 25]

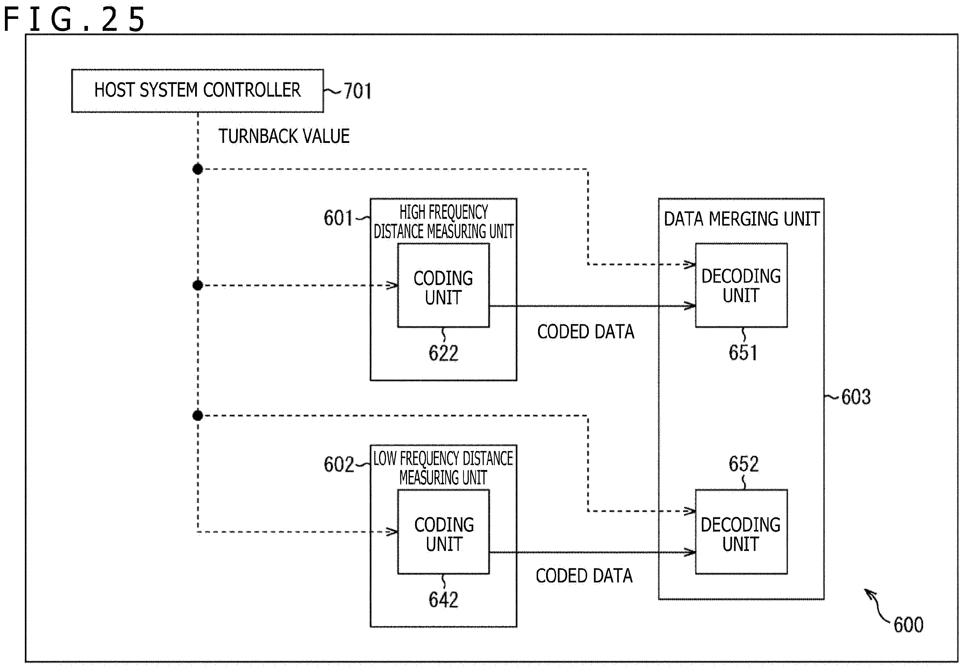

FIG. 25 is a diagram explaining an example of a state of supply of turnback values.
[FIG. 26]

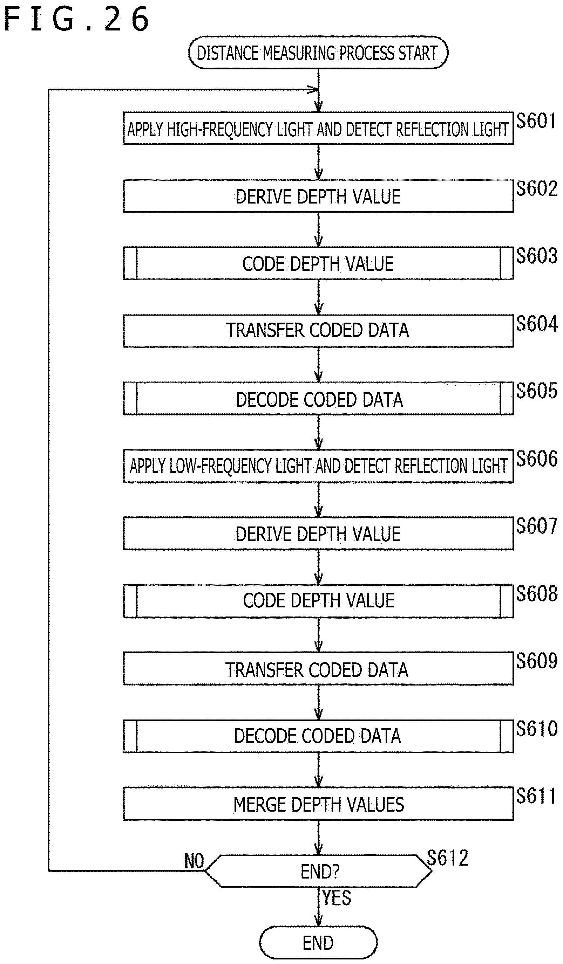

FIG. 26 is a flowchart illustrating an example of a flow of a distance measuring process.
[FIG. 27]

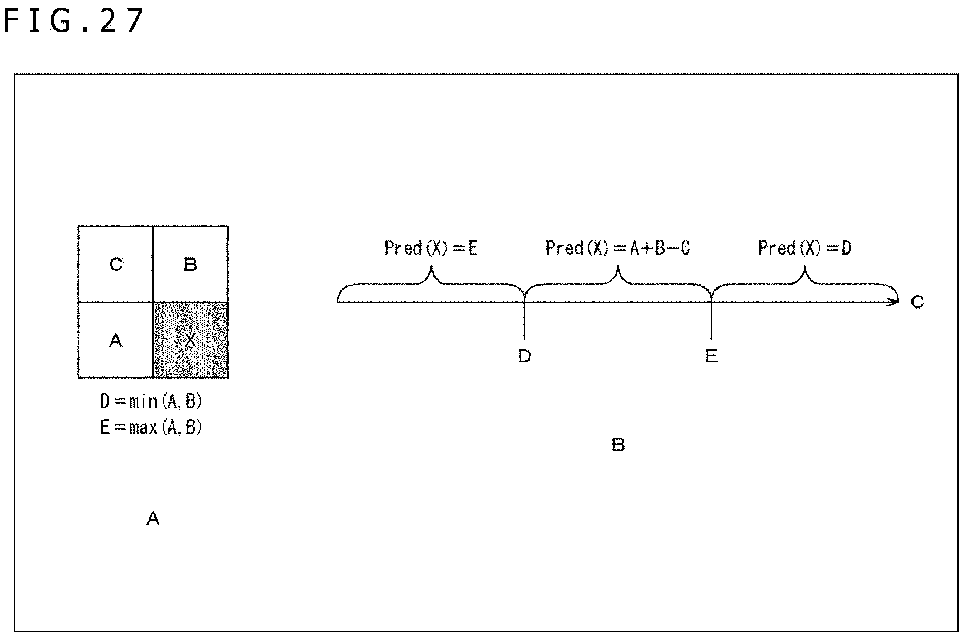

FIG. 27 is a diagram explaining P2 prediction.
[FIG. 28]

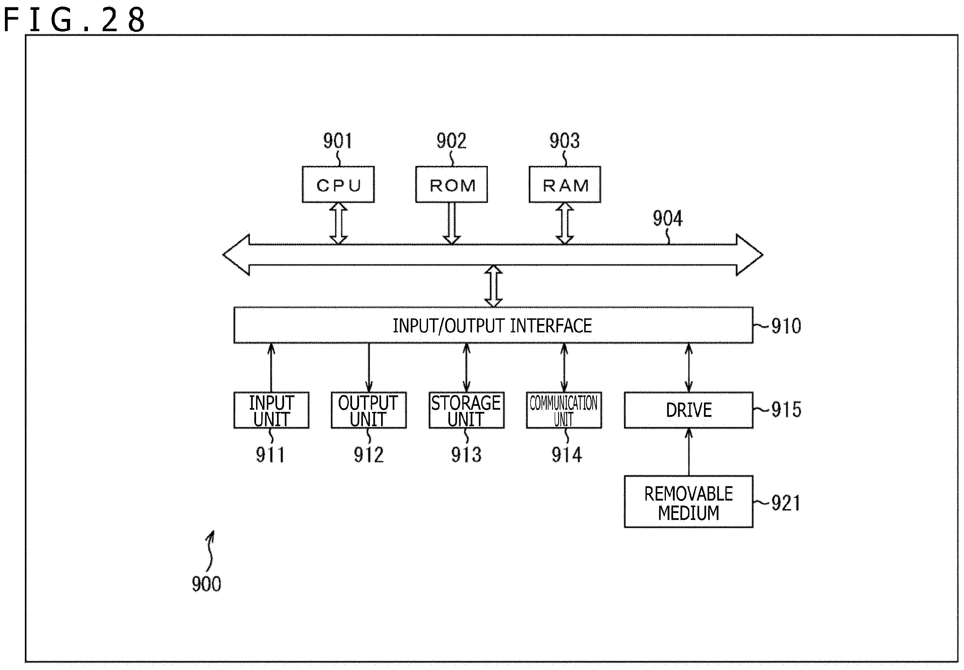

FIG. 28 is a block diagram depicting an example of a main configuration of a computer.

[Description of Embodiments]

Modes for carrying out the present disclosure (hereinafter referred to as embodiments) will be hereinafter described. Note that description will be presented in the following order.

1. Coding and decoding of wraparound data
2. First embodiment (coding device)
3. Second embodiment (decoding device)
4. Third embodiment (coding device)
5. Fourth embodiment (decoding device)
6. Fifth embodiment (distance measuring device)
7. Sixth embodiment (distance measuring device)
8. Supplementary notes

<1. Coding and decoding of wraparound data>

<iToF>

Use of image sensors for sensing has been increasing in recent years. For example, as recited in NPL 1, there has been developed a technology which measures a distance from a target object by detecting a phase difference between a sine wave applied from a light source and a reflected wave.

For example, as depicted in FIG. 1, there has been devised ToF (Time-of-Flight) which applies light (e.g., infrared light) from a light emission source 1 toward a subject 3, measures a time required until reception of reflection light of the applied light by a distance measuring sensor 2, and derives a distance to the subject 3 on the basis of the measured time. Moreover, as methods for this ToF, a direct ToF method (also called dToF (direct Time of Flight)) and an indirect ToF method (also called iToF (indirect Time of Flight)) have been devised.

The direct ToF method uses a TDC (Time-to-Digital Converter). Accordingly, high-pixelation is difficult to achieve. The indirect ToF method does not require a time calculation circuit, such as a TDC, within each pixel and therefore can suppress an increase in the number of elements within each pixel. Accordingly, high-pixelation is easily achievable.

In the case of the indirect ToF method, photocharge generated by a photodiode is modulated by a lock-in pixel with use of a time window (clock) synchronized with a light source. At this time, time information is reflected in a signal quantity, so that a flight time is derivable.

For example, a modulation method adopted for the indirect ToF method includes continuous wave modulation and pulse wave modulation. FIG. 2 illustrates an example of a state of continuous wave modulation. In a graph illustrated in FIG. 2, a sine wave 11 represents emission light (Emitted), while a sine wave 12 represents reflection light (Received). As illustrated in FIG. 2, in the case of continuous wave modulation, a phase difference between the emission light and the reflection light can be derived by lock-in detection using four time windows. The lock-in detection adopted herein refers to an action for accumulating signals of the same phase multiple times with use of a short electronic shutter synchronized with a light source. In the case of modulation by a sine wave, a phase difference $\varphi_{TOF}$ is derived by the following equation (1) with use of signals $A_0$, $A_1$, $A_2$, and $A_3$ accumulated in four time windows TW1, TW2, TW3, and TW4, respectively.

$$\phi_{TOF} = \frac{1}{2\pi f_m} \tan^{-1}\left(\frac{A_3 - A_1}{A_2 - A_0}\right)$$

$$\cdots \quad (1)$$

A modulation frequency $f_m$ is known. Accordingly, the phase ($\varphi_{TOF}$) can be converted to a time ($t_{TOF}$) by the following equation (2).

$$t_{TOF} = \frac{\phi_{TOF}}{2\pi f_m}$$

$$\cdots \quad (2)$$

Note that, while the received light contains a direct current component other than a light source component, i.e., a background light component, this background light component is cancelled by calculation of the equation (1) above. Accordingly, a distance can be estimated without being affected by background light, within a range of no saturation of a sensor.

Meanwhile, FIG. 3 illustrates an example of a state of pulse wave modulation. In the case of pulse wave modulation, a flight time $t_{TOF}$ is derived in a manner expressed by the following equation (3) on an assumption that signals accumulated by TW1 and TW2 are Ao and $A_1$, respectively.

$$t_{TOF} = \frac{N_2}{N_1 + N_2} T_0$$
$$\cdots \quad (3)$$

TD represents a discharge window through which unnecessary background light is discharged. Only the background light component can be recognized by providing three or more time windows TW. In this manner, a distance can be estimated without being affected by background light. According to the pulse wave modulation, imaging robust for background light can be achieved by raising a duty ratio of the light source.

<Depth value derivation device>

FIG. 4 is a block diagram depicting an example of a main configuration of a depth value derivation device which derives a depth value by using the indirect ToF method described above. A depth value derivation device 30 depicted in FIG. 4 includes a sensor 31, an i-signal generation unit 32, a q-signal generation unit 33, a phase difference detection unit 34, and a depth calculation unit 35.

The sensor 31 receives light and measures intensity of the received light in cooperation with shutters each having a quarter cycle of a modulation wave. The sensor 31 further supplies data of these four sections ($N_1$, $N_2$, $N_3$, $N_4$) to the i-signal generation unit 32 and the q-signal generation unit 33. The i-signal generation unit 32 subtracts the data $N_1$ from the data $N_3$ to generate an i (In-Phase)-signal. The i-signal generation unit 32 supplies this i-signal to the phase difference detection unit 34. The q-signal generation unit 33 subtracts the data N4 from the data N2 to generate a q (Quadrature)-signal. The q-signal generation unit 33 supplies this q-signal to the phase difference detection unit 34.

The phase difference detection unit 34 derives a phase difference $\varphi$ in a manner expressed by the following equation (4), by using the supplied i-signal and q-signal.

$$\phi = \tan^{-1}\left(\frac{q}{i}\right) = \tan^{-1}\left(\frac{N_4 - N_2}{N_3 - N_1}\right)$$
$$\cdots \quad (4)$$

The phase difference detection unit 34 supplies the derived phase difference $\varphi$ to the depth calculation unit 35.

The depth calculation unit 35 derives a depth value (depth) d from the phase difference $\varphi$ in a manner expressed by the following equation (5).

$$d = \frac{c}{4\pi f_m} \phi$$
$$\cdots \quad (5)$$

In the manner described above, the depth value d can be derived from a sensor output.

<iToF using multiple modulation frequencies>

According to iToF, more accurate distance measurement is achievable by raising a modulation frequency of irradiation light. In this case, however, a wavelength decreases. Accordingly, a distance measurable range is narrowed. For example, suppose that a distance of a range X extending between a spot at a distance X1 from a sensor and a spot at a distance X2 from the sensor is measurable. In this case, this range X can be more accurately measured by raising a modulation frequency. However, a length of this range X decreases (a difference between the distance X1 and the distance X2 decreases). By contrast, accuracy of distance measurement is lowered by reducing the modulation frequency. However, the length of the range X increases (the difference between the distance X1 and the distance X2 increases).

Accordingly, by using iToF combining multiple modulation frequencies, accuracy of distance measurement can be raised while suppressing a decrease of a distance measurable range (while suppressing a decrease in the length of the range X) (Dual Frequency iToF). For example, a more accurate depth value having a wider range of possible values can be obtained by merging a depth value that is derived by low modulation frequency iToF and is designated as a high-order bit and a depth value that is derived by high modulation frequency iToF and is designated as a low-order bit.

For example, as depicted in FIG. 5, such a method (Dual Frequency iToF) can be achieved by preparing devices (light source and sensor) for each modulation frequency and measuring a distance by using the devices and irradiation light of each modulation frequency.

Moreover, also adoptable is an example depicted in FIG. 6, which prepares a pair of devices (light source and sensor) and uses the devices in a time-division manner to achieve distance measurement with use of light of each modulation frequency. Specifically, distance measurement is carried out using irradiation light having a low modulation frequency at a certain timing, and distance measurement is carried out using irradiation light having a high modulation frequency at a different timing. By repeating distance measurement while switching the modulation frequencies along a time axis in the manner described above, distance measurement with use of irradiation light of each modulation frequency is achievable. Moreover, this case only requires a smaller number of parts than in the example of FIG. 5. For example, this case can be practiced with use of only one chip.

In a case where one device is used in a time-division manner as described above, it is required to store data of a distance measurement result (depth value) of at least one modulation frequency in a memory or the like to merge distance measurement results of respective modulation frequencies. When the data of the distance measurement result is to be stored in the memory, an increase in a memory capacity required for the storage can be suppressed by coding (compressing) the data.

Note that this data coding may be achieved by any coding method. However, it is preferable to adopt such a method capable of raising coding efficiency and reducing delays. For example, adoptable is such a method which derives a difference value between samples and codes the difference value, such as a method of DPCM (Differential Pulse Code Modulation).

<Coding of depth value>

Accordingly, coding of a depth value will be examined herein. For example, A in FIG. 7 illustrates a relation between a depth value (measured value) derived by distance measurement which uses irradiation light having a lowest modulation frequency and a practical distance (actual distance) from a sensor to an object corresponding to a distance measurement target, in the case of use of iToF combining multiple modulation frequencies as described above. That is, the relation between the measured value and the actual distance exhibits one-to-one correspondence. On the other hand, B in FIG. 7 illustrates a relation between a measured value obtained by distance measurement which uses irradiation light having a modulation frequency higher than that of A in FIG. 7 and an actual distance. That is, the measured value wraps around (turns back in) a predetermined value range. This occurs because a measurable range is narrower than a range of possible values of the actual distance.

For example, suppose that a distance from a sensor 41 to an object 42 is measured by a combination of iToF using a low modulation frequency and iToF using a high modulation frequency as depicted in A in FIG. 8. The sensor 41 includes multiple pixels like what is generally called an image sensor. Each of the pixels receives light such as reflection light. Accordingly, a depth value is obtained for each of the pixels of the sensor 41 as a distance measurement result. In addition, it is assumed that a range measurable by the sensor 41 in this distance measurement is indicated by a two-direction arrow 43. In other words, it is assumed that a range measurable by iToF using a low modulation frequency is indicated by the two-direction arrow 43.

As depicted in A in FIG. 8, the object 42 has a rectangular shape which has a longitudinal direction corresponding to a depth direction as viewed from the sensor 41. That is, the object 42 extends from a position closer to the sensor 41 to a position farther from the sensor 41. Accordingly, an actual distance from the sensor 41 to a surface of the object 42 smoothly changes from the position closer to the sensor 41 to the position farther from the sensor 41 in the longitudinal direction of the object 42.

A depth image 44 depicted in B in FIG. 8 indicates a distance measurement result (i.e., depth values of respective pixels) of the iToF using a low modulation frequency. The depth image 44 expresses depth values by colors. A brighter portion represents a farther position (larger depth value), while a darker portion represents a closer position (smaller depth value). As depicted in B in FIG. 8, depth values of pixels corresponding to the surface of the object 42, which has a smoothly changing actual distance, smoothly change in the longitudinal direction of the object 42 in the depth image 44 in a manner similar to the actual distance. Accordingly, at the time of coding, a difference from a near pixel is obtained and a difference value thus obtained is coded, as with the case of DPCM. In this manner, coding efficiency can be raised by utilizing a correlation between depth values of pixels.

A depth image 45 depicted in C in FIG. 8 illustrates a distance measurement result (i.e., depth values of respective pixels) of the iToF using a high modulation frequency. The depth image 45 expresses depth values by colors as with the case of the depth image 44. As depicted in B in FIG. 7, a measured value wraps around a predetermined value range in the case of iToF using a high modulation frequency. Accordingly, in the depth image 45, a depth value considerably changes at a turnback portion even in a region where the actual distance smoothly changes. For example, pixels above a dotted line 45A and pixels below the dotted line 45A have substantially the same actual distance but have considerably different depth values as a result of turnback of the depth values. Hence, if a difference value as a difference from a near pixel is obtained and coded at the time of coding as with the case of DPCM, the difference value may become large at a turnback portion of such a depth value. Specifically, in the case of a depth value which wraps around, a correlation with a near pixel may be lowered, and therefore, coding efficiency may be dropped.

While PTL 1 and PTL 2 each disclose a method which limits a difference value and coded data within a predetermined value range by wrapping around these, to suppress a drop of coding efficiency. However, a drop of coding efficiency of such wraparound data as the depth value described above is difficult to suppress by these methods.

<Correction of difference value>

Accordingly, a difference value is appropriately corrected before coding. For example, an information processing method quantizes a depth value wrapping around a predetermined value range by using a predetermined quantization step, derives a difference value between the quantized depth value and a predicted value of the depth value, quantizes a turnback value of the depth value by using the quantization step described above, appropriately corrects the derived difference value by using the quantized turnback value, and codes the difference value appropriately corrected.

For example, an information processing device includes a first quantization unit that quantizes a depth value wrapping around a predetermined value range by using a predetermined quantization step, a difference value derivation unit that derives a difference value between the depth value quantized by the first quantization unit and a predicted value of the depth value, a second quantization unit that quantizes a turnback value of the depth value by using the quantization step described above, a correction unit that appropriately corrects, by using the turnback value quantized by the second quantization unit, the difference value derived by the difference value derivation unit, and a coding unit that codes the difference value appropriately corrected by the correction unit.

An increase in the difference value produced by turnback of the depth value can be suppressed by appropriately correcting the difference value with use of the turnback value of the depth value as described above. Accordingly, suppression of a drop of coding efficiency is achievable.

Note that quantization of the depth value can decrease the difference value. However, when only the depth value is quantized, no correlation is established between the depth value and the turnback value. In this case, correction of the difference value is difficult to achieve. Accordingly, the turnback value is also quantized by using a quantization step similar to the quantization step for the depth value. In this manner, the correlation between the depth value and the turnback value can be maintained, achieving correction of the difference value. Accordingly, an increase in the difference value can be more suppressed, and therefore, further suppression of a drop of coding efficiency is achievable.

<Correction of coefficient data>

Note that coded data of a depth value (a difference value of a depth value) described above is decoded when used. At the time of decoding of the coded data, coefficient data (quantized depth value) obtained by decoding the coded data is appropriately corrected.

For example, an information processing method decodes coded data to derive a difference value between coefficient data associated with a depth value wrapping around a predetermined value range and a predicted value of the coefficient data, adds the predicted value to the derived difference value to derive the coefficient data, quantizes a turnback value of the depth value by using a predetermined quantization step, appropriately corrects the derived coefficient data by using the quantized turnback value, and inversely quantizes the corrected coefficient data by using the quantization step described above, to derive the depth value.

For example, an information processing device includes a decoding unit that decodes coded data to derive a difference value between coefficient data associated with a depth value wrapping around a predetermined value range and a predicted value of the coefficient data, a coefficient data derivation unit that adds the predicted value to the difference value derived by the decoding unit to derive the coefficient data, a quantization unit that quantizes a turnback value of the depth value by using a predetermined quantization step, a correction unit that appropriately corrects, by using the turnback value quantized by the quantization unit, the coefficient data derived by the coefficient data derivation unit, and an inverse quantization unit that inversely quantizes, by using the quantization step described above, the coefficient data appropriately corrected by the correction unit, to derive the depth value.

As described above, the coefficient data derived by decoding the coded data, for example, is appropriately corrected by using the turnback value of the depth value. In this manner, the depth value can be derived by appropriately decoding the coded data. In other words, an increase in the difference value produced by turnback of the depth value can be suppressed, and therefore, suppression of a drop of coding efficiency is achievable.

Note that, in a case where the depth value is quantized and coded, no correlation is established between the coefficient data obtained by decoding the coded data, for example, and the turnback value of the depth value. In this case, correction of the coefficient data by using the turnback value of the depth value is difficult to achieve. Accordingly, the turnback value of the depth value is quantized by a quantization step similar to the quantization step adopted to inverse quantization of the coefficient data. In this manner, a correlation between the coefficient data and the turnback value can be maintained, and therefore, correction of the coefficient data can be achieved. Accordingly, an increase in the difference value can be suppressed, and therefore, further suppression of a drop of coding efficiency is realizable.

<2. First embodiment>

<Coding device>

FIG. 9 is a block diagram depicting an example of a configuration of a coding device as one mode of the information processing device to which the present technology is applied. A coding device 100 depicted in FIG. 9 is a device which codes depth data (depth image, depth value) obtained by iToF. Note that FIG. 9 depicts only main parts of processing units and data flows and therefore does not necessarily illustrate all processing units and data flows. Specifically, the coding device 100 may include a processing unit not depicted as a block in FIG. 9, or a process or a data flow not indicated by an arrow or the like in FIG. 9.

As depicted in FIG. 9, the coding device 100 includes a quantization unit 111, a quantization unit 112, a DPCM processing unit 113, an arithmetic unit 114, an arithmetic unit 115, a selection control unit 116, a selection unit 117, and a coding unit 118. The arithmetic unit 114, the arithmetic unit 115, the selection control unit 116, and the selection unit 117 constitute a correction unit 121.

The quantization unit 111 acquires a turnback value of a depth value which wraps around. For example, the turnback value is an upper limit of the depth value (measured value) which wraps around, as depicted in FIG. 10. That is, the depth value (measured value) which wraps around is a value smaller than the turnback value. In the case of the example depicted in FIG. 10, the turnback value is "1500." The turnback value is supplied from an outside of the coding device 100. For example, the turnback value may be supplied from a system controller or the like.

The quantization unit 111 quantizes the acquired turnback value by using a quantization step. The quantization step is set for each of any data units. For example, the quantization step may be set for each of blocks (multiple pixels in a depth image). Moreover, the quantization unit 111 shares this quantization step with the quantization unit 112. That is, the quantization unit 111 quantizes the turnback value by using a quantization step identical to a quantization step of the quantization unit 112. In this manner, a correlation can be maintained between the turnback value and the depth value. For example, the quantization unit 111 divides the turnback value by the quantization step to quantize the turnback value. After derivation of the quantized turnback value (e.g., (turnback value)/(quantization step)), the quantization unit 111 supplies the quantized turnback value to the correction unit 121 (the arithmetic unit 114 and the arithmetic unit 115 of the correction unit 121).

The quantization unit 112 acquires a depth value as input data. The depth value is information indicating a distance from a sensor used for distance measurement to a subject including an object corresponding to a distance measurement target. A method employed for the distance measurement may be any method. For example, the depth value may be derived by distance measurement using an indirect ToF (Time-of-Flight) method. For example, the depth value may be derived in the following manner. IR laser light is applied from a light output unit. The applied light is reflected on the subject including the object corresponding to the distance measurement target, and is detected by the sensor as reflection light. The depth value is derived from a phase difference between the applied light and the reflection light. The sensor may include multiple pixels, and the depth value may be derived for each of the pixels of the sensor. Accordingly, it is possible that the quantization unit 112 acquires a depth image including depth values of the respective pixels.

The depth value wraps around a predetermined value range. For example, the depth value may be derived by distance measurement based on an indirect ToF method performed by using light having a high modulation frequency. For example, the depth value may be derived by applying light having a modulation frequency whose distance measurable range is narrower than a range of possible values of the distance to the subject, and detecting reflection light of the applied light.

The quantization unit 112 quantizes the depth value thus acquired, by using a quantization step. The quantization step is set for each of any data units. For example, the quantization step may be set for each of blocks (multiple pixels in a depth image). Moreover, the quantization unit 112 shares the quantization step with the quantization unit 111. Specifically, the quantization unit 112 quantizes the depth value by using a quantization step identical to the quantization step of the quantization unit 111. In this manner, a correlation can be maintained between the turnback value and the depth value. For example, the quantization unit 112 divides the depth value by the quantization step to quantize the depth value.

After derivation of the quantized depth value (e.g., (depth value)/(quantization step)), the quantization unit 112 supplies the quantized depth value to the DPCM processing unit 113.

The DPCM processing unit 113 performs DPCM processing on the depth value quantized by the quantization unit 112, to derive a difference value between the depth value and a predicted value of the depth value. Specifically, the DPCM processing unit 113 designates a depth value of a previous processing target pixel, which is a pixel processed one pixel before, as a predicted value of a current processing target pixel which is a processing target pixel at present, and derives a difference value between the depth value of the current processing target pixel and the depth value of the previous processing target pixel. On the basis of the difference value derived by the DPCM processing unit 113 in the manner described above, suppression of a drop of coding efficiency is achievable. The DPCM processing unit 113 supplies the difference value derived by the DPCM processing to the correction unit 121 (the arithmetic unit 114, the arithmetic unit 115, the selection control unit 116, and the selection unit 117 of the correction unit 121).

The correction unit 121 appropriately corrects, by using the turnback value quantized by the quantization unit 111, the difference value derived by the DPCM processing unit 113.

The arithmetic unit 114 acquires the difference value supplied from the DPCM processing unit 113. The arithmetic unit 114 further acquires the quantized turnback value supplied by the quantization unit 111. The arithmetic unit 114 adds the quantized turnback value to the difference value to correct the difference value. The arithmetic unit 114 supplies a correction result (an addition result as a sum of the difference value and the quantized turnback value) to the selection control unit 116 and the selection unit 117.

The arithmetic unit 115 acquires the difference value supplied from the DPCM processing unit 113. Moreover, the arithmetic unit 115 acquires the quantized turnback value supplied by the quantization unit 111. The arithmetic unit 115 subtracts the quantized turnback value from the difference value to correct the difference value. The arithmetic unit 115 supplies a correction result (a subtraction result as a difference between the difference value and the quantized turnback value) to the selection control unit 116 and the selection unit 117.

The selection control unit 116 acquires the difference value supplied from the DPCM processing unit 113. The selection control unit 116 further acquires the correction result of the difference value (i.e., the addition result as the sum of the difference value and the quantized turnback value) supplied from the arithmetic unit 114. The selection control unit 116 further acquires the correction result of the difference value (i.e., the subtraction result as the difference between the difference value and the quantized turnback value) supplied from the arithmetic unit 115. The selection control unit 116 controls operation of the selection unit 117 on the basis of these values.

The selection unit 117 acquires the difference value supplied from the DPCM processing unit 113. The selection unit 117 further acquires the correction result of the difference value (i.e., the addition result as the sum of the difference value and the quantized turnback value) supplied from the arithmetic unit 114. The selection unit 117 further acquires the correction result of the difference value (i.e., the subtraction result as the difference between the difference value and the quantized turnback value) supplied from the arithmetic unit 115. The selection unit 117 selects a minimum absolute value from among absolute values of the acquired difference value, addition result, and subtraction result under control by the selection control unit 116. The selection unit 117 supplies the selected value (any of the difference value, the addition result, and the subtraction result) to the coding unit 118.

The coding unit 118 acquires information supplied from the correction unit 121 (the selection unit 117 of the correction unit 121) and codes the acquired information. This information corresponds to the difference value appropriately corrected by the correction unit 121. Specifically, this information corresponds to any of the difference value, the addition result, and the subtraction result selected by the selection unit 117. A method employed for this coding may be any method. For example, variable-length coding (VLC (Variable Length Code)), or fixed-length coding (FLC (Fixed Length Coding)) may be adopted. The coding unit 118 outputs coded data derived by coding the appropriately corrected difference value (difference value, addition result, or subtraction result) to the outside of the coding device 100.

<Processing example>

An example of processing performed by the coding device 100 configured as above will be described with reference to FIG. 11. For example, suppose that depth values of continuous four pixels corresponding to input data are "1490," "0," "10," and "20." Each of these depth values is a depth value obtained by high frequency iToF and wraps around a turnback value of "1500." It is further assumed that these depth values are positive integers. Specifically, it is assumed that a value range of the depth values is a range from "0" to "1499." In addition, suppose that turnback of the depth value is caused at the second pixel from the left in the four pixels described above. That is, suppose that actual distances corresponding to the four pixels to a subject are "1490," "1500," "1510," and "1520."

Moreover, as illustrated in FIG. 11, a quantization step is set to "10." The quantization unit 111 divides a turnback value of a depth value by this quantization step to quantize the turnback value. Accordingly, in the case of this example, "150" is obtained as the quantized turnback value as illustrated in FIG. 11. The quantization unit 112 divides input data (depth value) by the quantization step "10" to quantize the input data. Accordingly, "149," "0," "1," and "2" are obtained as the input data quantized by the quantization unit 112 as illustrated in a left part of FIG. 11.

Suppose that the DPCM processing unit 113 calculates a difference [1] between a depth value and a predicted value which is a depth value of a pixel located to the immediate left. Since the DPCM processing unit 113 uses the quantized input data described above as the depth value, "-149," "1," and "1" are obtained as [1] as illustrated in the left part of FIG. 11. That is, the difference value of the pixel causing turnback increases.

As described above, the actual distances corresponding to these four pixels are "1490," "1500," "1510," and "1520." Accordingly, if no turnback is caused by these depth values, "149," "150," "151," and "152" are obtained as the corrected input data (input data in the case of no turnback). If the DPCM processing unit 113 derives [1] on the basis of these depth values, "1," "1," and "1" are obtained as [1]. Specifically, in the case of the example in FIG. 11, the difference value of the pixel causing turnback increases in comparison with the case of no turnback. Accordingly, coding efficiency may drop if [1] described above is coded.

For solving this problem, the arithmetic unit 114 adds the quantized turnback value "150" to [1] to derive a correction result (addition result) [2]. In the case of the example in the left part of FIG. 11, "1," "151," and "151" are obtained as [2]. Moreover, the arithmetic unit 115 subtracts the quantized turnback value "150" from [1] to derive a correction result (subtraction result) [3]. In the case of the example in the left part of FIG. 11, "-259," "-149," and "-149" are obtained as [3].

Thereafter, the selection unit 117 selects a minimum absolute value from among absolute values of [1], [2], and [3] for each of the pixels under control by the selection control unit 116. In the case of the example in the left part of FIG. 11, "1," "1," and "1" are selected.

As described above, a difference value is appropriately corrected, and a minimum absolute value is selected from among absolute values of the corrected difference value. In this manner, an increase in the coded difference value can be suppressed. Accordingly, suppression of a drop of coding efficiency is achievable.

A right part of FIG. 11 illustrates a different example. Suppose that depth values of continuous four pixels corresponding to input data are "20," "10," "0," and "1490" in this example. Each of these depth values is a depth value obtained by high frequency iToF and wraps around a turnback value of "1500." It is further assumed that these depth values are positive integers. Specifically, it is assumed that a value range of the depth values is a range from "0" to "1499." In addition, suppose that turnback of the depth value is caused at the first pixel from the right in the four pixels described above. That is, suppose that actual distances corresponding to the four pixels to a subject are "1520," "1510," "1500," and "1490."

Moreover, as illustrated in FIG. 11, a quantization step is set to "10." In the case of this example, "150" is obtained as the quantized turnback value as illustrated in FIG. 11. Moreover, "2," "1," "0," and "149" are obtained as the quantized input data as illustrated in the right part of FIG. 11.

In the case of this example, "-1," "-1," and "-149" are obtained as [1]. Accordingly, the difference value of the pixel causing turnback increases.

As described above, the actual distances corresponding to these four pixels are "1520," "1510," "1500," and "1490." Accordingly, if no turnback of these depth values is caused, "152," "151," "150," and "149" are obtained as the corrected input data (input data in the case of no turnback). Accordingly, "-1," "-1," and "-1" are obtained as [1]. Specifically, in the case of the example in FIG. 11, the difference value of the pixel causing turnback increases in comparison with the case of no turnback. Accordingly, coding efficiency may drop if [1] described above is coded.

For solving this problem, the arithmetic unit 114 adds the quantized turnback value "150" to [1] to derive a correction result (addition result) [2]. In the case of the example in the right part of FIG. 11, "149," "149," and "299" are obtained as [2]. Moreover, the arithmetic unit 115 subtracts the quantized turnback value "150" from [1] to derive a correction result (subtraction result) [3]. In the case of the example in the right part of FIG. 11, "-151," "-151," and "-1" are obtained as [3].

Thereafter, the selection unit 117 selects a minimum absolute value from among absolute values of [1], [2], and [3] for each of the pixels under control by the selection control unit 116. In the case of the example in the right part of FIG. 11, "-1," "-1," and "-1" are selected.

As described above, a difference value is appropriately corrected, and a minimum absolute value is selected from among absolute values of the corrected difference value. In this manner, an increase in the coded difference value can be suppressed. Accordingly, suppression of a drop of coding efficiency is achievable.

Moreover, the depth value and a turnback value of the depth value are both quantized. Hence, an increase in the difference value can be more suppressed, and therefore, further suppression of a drop of coding efficiency is achievable.

<Flow of coding process>

An example of a flow of a coding process executed by the coding device 100 will subsequently be described with reference to a flowchart in FIG. 12.

At a start of the coding process, the quantization unit 111 of the coding device 100 divides a turnback value by a predetermined quantization step to quantize the turnback value in step S101.

In step S102, the quantization unit 112 divides input data (a depth value wrapping around a predetermined value range) by a quantization step identical to the quantization step used by the quantization unit 111 for quantization, to quantize the input data.

In step S103, the DPCM processing unit 113 executes DPCM processing for the quantized input data derived in step S102, to derive a difference value (difference data) between a depth value of a current processing target pixel and a depth value of a processing target pixel one pixel before.

In step S104, the arithmetic unit 114 adds the quantized turnback value derived in step S101 to the difference data derived in step S103.

In step S105, the arithmetic unit 115 subtracts the quantized turnback value derived in step S101, from the difference data derived in step S103.

In step S106, the selection unit 117 selects a minimum absolute value from among absolute values of the difference data derived in step S103, the addition result derived in step S104, and the subtraction result derived in step S105, under control by the selection control unit 116.

In step S107, the coding unit 118 codes appropriately corrected difference data (the difference value, the addition result, or the subtraction result selected in step S106) to derive coded data.

After completion of processing in step S107, the coding process ends. The coding device 100 executes such a coding process for each of pixels (respective depth values) in a depth image.

In this manner, an increase in the coded difference value can be suppressed as described above. Accordingly, suppression of a drop of coding efficiency is achievable.

Moreover, the depth value and the turnback value of the depth value are both quantized. Hence, an increase in the difference value can be more suppressed, and therefore, further suppression of a drop of coding efficiency is achievable.

<3. Second embodiment>

<Decoding device>

FIG. 13 is a block diagram depicting an example of a configuration of a decoding device as one mode of the information processing device to which the present technology is applied. A decoding device 200 depicted in FIG. 13 is a device which decodes coded data of depth data (depth image, depth value) obtained by iToF. The decoding device 200 acquires and decodes coded data generated by the coding device 100 and outputs a depth value as output data.

Note that FIG. 13 depicts only main parts of processing units and data flows and therefore does not necessarily illustrate all processing units and data flows. Specifically, the decoding device 200 may include a processing unit not depicted as a block in FIG. 13, or a process or a data flow not indicated by an arrow or the like in FIG. 13.

As depicted in FIG. 13, the decoding device 200 includes a quantization unit 211, a decoding unit 1212, an inverse DPCM processing unit 213, an arithmetic unit 214, an arithmetic unit 215, a selection control unit 216, a selection unit 217, and an inverse quantization unit 218. The arithmetic unit 214, the arithmetic unit 215, the selection control unit 216, and the selection unit 217 constitute a correction unit 221.

The quantization unit 211 acquires a turnback value of a depth value which wraps around. This turnback value is similar to the turnback value in the case of the coding device 100 (example in FIG. 10). The turnback value is supplied from an outside of the decoding device 200. For example, the turnback value may be supplied from a system controller or the like. Alternatively, for example, the turnback value may be supplied from the coding device 100 having generated coded data.

The quantization unit 211 quantizes the acquired turnback value by using a quantization step. This quantization step is set for each of any data units. For example, the quantization step may be set for each of blocks (multiple pixels in a depth image). Moreover, the quantization unit 211 shares this quantization step with the inverse quantization unit 218. Specifically, the quantization unit 211 quantizes the turnback value by using a quantization step identical to a quantization step of the inverse quantization unit 218. In this manner, a correlation can be maintained between the turnback value and the depth value. For example, the quantization unit 211 divides the turnback value by the quantization step to quantize the turnback value. After derivation of the quantized turnback value (e.g., (turnback value)/(quantization step)), the quantization unit 211 supplies the quantized turnback value to the correction unit 221 (the arithmetic unit 214, the arithmetic unit 215, and the selection control unit 216 of the correction unit 221).

The decoding unit 212 acquires coded data. This coded data is generated by the coding device 100 using the present technology described in the first embodiment. The decoding unit 212 decodes the acquired coded data to generate difference data. The decoding unit 212 decodes the coded data by a decoding method corresponding to the coding method used by the coding unit 118. This difference data is a difference value between coefficient data associated with a depth value wrapping around a predetermined value range and a predicted value of the coefficient data. For example, variable-length coding (VLC (Variable Length Code)), or fixed-length coding (FLC (Fixed Length Coding)) may be adopted. The decoding unit 212 supplies the derived difference data to the inverse DPCM processing unit 213.

The inverse DPCM processing unit 213 acquires difference data of a current processing target pixel which is a processing target pixel at present and is supplied from the decoding unit 212. This difference data is a difference value between coefficient data of the current processing target pixel and coefficient data of a previous processing target pixel which is a processing target pixel one pixel before. The inverse DPCM processing unit 213 further acquires coefficient data of the previous processing target pixel from the selection unit 217. The inverse DPCM processing unit 213 designates the coefficient data of the previous processing target pixel as a predicted value of the current processing target pixel, and performs inverse DPCM processing which is an inverse process of DPCM processing. The inverse DPCM processing is processing for adding the predicted value of the current processing targe pixel to the difference data of the current processing target pixel. Specifically, the inverse DPCM processing unit 213 adds the coefficient data of the previous processing target pixel to the difference data of the current processing target pixel to derive coefficient data of the current processing target. In this manner, coded data as a coded difference value can correctly be decoded on the basis of coefficient data derived by the inverse DPCM processing unit 213 from difference data. In other words, coding of the difference value is achievable. Accordingly, suppression of a drop of coding efficiency is achievable. The inverse DPCM processing unit 213 supplies the coefficient data of the current processing target pixel derived by the inverse DPCM processing to the correction unit 221 (the arithmetic unit 214, the arithmetic unit 215, the selection control unit 216, and the selection unit 217 of the correction unit 221).

The correction unit 221 appropriately corrects, by using the turnback value quantized by the quantization unit 211, the coefficient data derived by the inverse DPCM processing unit 1213.

The arithmetic unit 214 acquires the coefficient data supplied from the inverse DPCM processing unit 213. The arithmetic unit 214 further acquires the quantized turnback value supplied from the quantization unit 211. The arithmetic unit 214 adds the quantized turnback value to the coefficient data to correct the coefficient data. The arithmetic unit 214 supplies a correction result (an addition result as a sum of the coefficient data and the quantized turnback value) to the selection unit 217.

The arithmetic unit 215 acquires the coefficient data supplied from the inverse DPCM processing unit 213. The arithmetic unit 215 further acquires the quantized turnback value supplied from the quantization unit 211. The arithmetic unit 215 subtracts the quantized turnback value from the coefficient data to correct the coefficient data. The arithmetic unit 215 supplies a correction result (a subtraction result as a difference between the coefficient data and the quantized turnback value) to the selection unit 217.

The selection control unit 216 acquires the quantized turnback value supplied from the quantization unit 211. The selection control unit 216 further acquires the coefficient data supplied from the inverse DPCM processing unit 213. The selection control unit 216 controls operation of the selection unit 217 on the basis of these values.

The selection unit 217 acquires the coefficient data supplied from the inverse DPCM processing unit 213. The selection unit 217 further acquires the correction result of the coefficient data supplied from the arithmetic unit 214 (i.e., the addition result as the sum of the coefficient data and the quantized turnback value). The selection unit 217 further acquires the correction result of the coefficient data supplied from the arithmetic unit 215 (i.e., the subtraction result as the difference between the coefficient data and the quantized turnback value). The selection unit 217 selects a value falling within a value range of the depth value from among values of the acquired coefficient data, addition result, and subtraction result under control by the selection control unit 216. The selection unit 217 supplies the selected value (any of the coefficient data, the addition result, and the subtraction result) to the inverse quantization unit 218 as appropriately corrected coefficient data.

The inverse quantization unit 218 acquires the appropriately corrected coefficient data supplied from the selection unit 217. This coefficient data is a quantized depth value.

The inverse quantization unit 218 inversely quantizes the appropriately corrected coefficient data by using a quantization step. For example, the inverse quantization unit 218 inversely quantizes the one selected by the selection unit 217 from among the coefficient data, the addition result, and the subtraction result. This appropriately corrected coefficient data is a quantized depth value. In other words, the inverse quantization unit 218 inversely quantizes the appropriately corrected coefficient data to derive the depth value.

This quantization step is set for each of any data units. For example, the quantization step may be set for each of blocks (multiple pixels in a depth image). Moreover, the inverse quantization unit 218 shares the quantization step with the quantization unit 211. Specifically, the inverse quantization unit 218 inversely quantizes the coefficient data by using a quantization step identical to the quantization step of the quantization unit 211. In this manner, a correlation can be maintained between the turnback value and the depth value. For example, the inverse quantization unit 218 multiplies the appropriately corrected coefficient data by the quantization step to derive the depth value.

This depth value is information indicating a distance from a sensor used for distance measurement to a subject including an object corresponding to a distance measurement target. A method employed for the distance measurement may be any method. For example, the depth value may be derived by distance measurement using an indirect ToF (Time-of-Flight) method. For example, the depth value may be derived in the following manner. IR laser light is applied from a light output unit. The applied light is reflected on the subject including the object corresponding to the distance measurement target, and is detected by the sensor as reflection light. The depth value is derived from a phase difference between the applied light and the reflection light. The sensor may include multiple pixels, and the depth value may be derived for each of the pixels of the sensor. In other words, the inverse quantization unit 218 inversely quantizes the coefficient data to derive such a depth value.

This depth value wraps around a predetermined value range. For example, the depth value may be such a depth value derived by distance measurement based on an indirect ToF method performed by using light having a high modulation frequency. For example, the depth value to be obtained (restored) by the inverse quantization may be such a depth value derived by applying light having a modulation frequency whose distance measurable range is narrower than a range of possible values of the distance to the subject, and detecting reflection light of the applied light.

The inverse quantization unit 218 outputs the derived depth value to the outside of the decoding device 200 as output data.

<Processing example>

An example of processing performed by the decoding device 200 configured as above will be described with reference to FIG. 14. For example, suppose that difference data of continuous four pixels from respective pixels located to the immediate left are "1," "1," and "1" as in an example in a left part of FIG. 14. By performing inverse DPCM processing on this difference data, "149," "150," "1," and "2" are obtained as coefficient data (decoded data).

In a case where this coefficient data is out of a value range (0 to 149), the selection unit 217 selects corrected coefficient data falling within the value range. In the case of the example in the left part of FIG. 14, decoded data of the second pixel from the left is out of a region. Accordingly, the selection unit 217 selects corrected coefficient data. In the case of this example, the selection unit 217 selects a subtraction result calculated by subtracting a quantized turnback value from the decoded data.

Thereafter, the inverse quantization unit 218 inversely quantizes the coefficient data appropriately corrected in this manner. By the inverse quantization, output data (depth values) of "1490," "0," "10," and "20" are obtained.

In the case of an example in a right part of FIG. 14, difference data of continuous four pixels from respective pixels located to the immediate left are "-1," "-1," and "-1." By performing inverse DPCM processing on this difference data, "2," "1," "0," and "-1" are obtained as coefficient data (decoded data).

In a case where this coefficient data is out of a value range (0 to 149), the selection unit 217 selects corrected coefficient data falling within the value range. In the case of the example in the right part of FIG. 14, decoded data of the fourth pixel from the left is out of the region. Accordingly, the selection unit 217 selects corrected coefficient data. In the case of this example, the selection unit 217 selects an addition result calculated by adding the quantized turnback value to the decoded data.

Thereafter, the inverse quantization unit 218 inversely quantizes the coefficient data appropriately corrected in this manner. By the inverse quantization, output data (depth values) of "20," "10," "0," and "1490" are obtained.

By appropriately correcting the coefficient data out of the value range in the manner described above, an increase in the difference value can be suppressed. Accordingly, suppression of a drop of coding efficiency is achievable. Moreover, since the turnback value of the depth value is quantized and used, an increase in the difference value can be more suppressed, and therefore, further suppression of a drop of coding efficiency is achievable.

<Flow of decoding process>

An example of a flow of a decoding process executed by the decoding device 200 will subsequently be described with reference to a flowchart in FIG. 15.

At a start of the decoding process, the quantization unit 211 of the decoding device 200 divides a turnback value by a predetermined quantization step to quantize the turnback value in step S201.

In step S202, the decoding unit 212 decodes coded data to derive difference data.

In step S203, the inverse DPCM processing unit 213 executes inverse DPCM processing for the difference data derived in step S201, to derive coefficient data (decoded data).

In step S204, the arithmetic unit 214 adds the quantized turnback value derived in step S201 to the coefficient data (decoded data) derived in step S203.

In step S205, the arithmetic unit 215 subtracts the quantized turnback value derived in step S201, from the coefficient data (decoded data) derived in step S203.

In step S206, the selection unit 217 selects a value falling within a value range of a depth value from among values of the coefficient data (decoded data) derived in step S203, the addition result derived in step S204, and the subtraction result derived in step S205, under control by the selection control unit 216.

In step S207, the inverse quantization unit 218 inversely quantizes the one selected in step S206 from among the coefficient data (decoded data) derived in step S203, the addition result derived in step S204, and the subtraction result derived in step S205, to derive the depth value.

After completion of processing in step S207, the decoding process ends. The decoding device 200 executes such a decoding process for each of pixels (respective depth values) in a depth image.

In this manner, an increase in the difference value can be suppressed as described above. Accordingly, suppression of a drop of coding efficiency is achievable. Moreover, since the turnback value of the depth value is quantized, an increase in the difference value can be more suppressed, and therefore, further suppression of a drop of coding efficiency is achievable.

<4. Third embodiment>

<Coding device>

Described with reference to FIG. 9 has been the method which derives a difference value, an addition result, and a subtraction result and selects a minimum absolute value from among absolute values of them, as a method for achieving appropriate correction of a difference value with use of the coding device 100. However, the method for achieving appropriate correction of the difference value is not limited to this example and may be any methods. For example, the correction method may be selected on the basis of the difference value.

FIG. 16 depicts an example of a main configuration of the coding device 100 in this case. The DPCM processing unit 113 in this case supplies a difference value derived by the DPCM processing to the correction unit 121 (the selection control unit 116 and the selection unit 117 of the correction unit 121).

The selection control unit 116 acquires the difference value supplied from the DPCM processing unit 113. The selection control unit 116 further acquires a quantized turnback value supplied from the quantization unit 111. The selection control unit 116 controls operation of the selection unit 117 on the basis of these values.

The selection unit 117 acquires the difference value supplied from the DPCM processing unit 113. The selection unit 117 selects a method for correcting the difference value, on the basis of the acquired difference value under control by the selection control unit 116. Thereafter, the selection unit 117 supplies the difference value to a processing unit corresponding to the selection. For example, the selection unit 117 selects omission of correction of the difference value, addition of the quantized turnback value to the difference value, or subtraction of the quantized turnback value from the difference value, as the method for correcting the difference value. Thereafter, in a case where omission of correction of the difference value is selected, the selection unit 117 supplies the difference value to the coding unit 118. Alternatively, in a case where addition of the quantized turnback value is selected, the selection unit 117 supplies the difference value to the arithmetic unit 114. Further alternatively, in a case where subtraction of the quantized turnback value is selected, the selection unit 117 supplies the difference value to the arithmetic unit 115.

In the case where addition of the quantized turnback value is selected by the selection unit 117, the arithmetic unit 114 acquires the difference value supplied from the selection unit 117, and adds the quantized turnback value supplied from the quantization unit 111 to the acquired difference value. The arithmetic unit 114 supplies a correction result (an addition result as a sum of the difference value and the quantized turnback value) to the coding unit 118.

In the case where subtraction of the quantized turnback value is selected by the selection unit 117, the arithmetic unit 115 acquires the difference value supplied from the selection unit 117, and subtracts the quantized turnback value supplied from the quantization unit 111, from the acquired difference value. The arithmetic unit 115 supplies a correction result (a subtraction result as a difference between the difference value and the quantized turnback value) to the coding unit 118.

In the case where omission of correction of the difference value is selected by the selection unit 117, the coding unit 118 acquires the difference value supplied from the selection unit 117 and codes the difference value. Alternatively, in the case where addition of the quantized turnback value is selected by the selection unit 117, the coding unit 118 codes the addition result as the sum of the difference value derived by the arithmetic unit 114 and the quantized turnback value. Further alternatively, in the case where subtraction of the quantized turnback value is selected by the selection unit 117, the coding unit 118 codes the subtraction result as the difference between the difference value derived by the arithmetic unit 115 and the quantized turnback value. Coding methods similar to the coding methods in the case of FIG. 9 are adoptable. As described above, the coding unit 118 outputs coded data derived by coding the appropriately corrected difference value (difference value, addition result, or subtraction result) to the outside of the coding device 100.

By selecting the correction method on the basis of the difference value as described above, an increase in the coded difference value can be suppressed. Accordingly, suppression of a drop of coding efficiency is achievable. Moreover, in this case, too, the depth value and the turnback value of the depth value are both quantized, and hence, an increase in the difference value can be more suppressed, so that further suppression of a drop of coding efficiency is achievable.

<Flow of coding process>

An example of a flow of the coding process in this case will be described with reference to a flowchart in FIG. 17.

At a start of the coding process, the quantization unit 111 of the coding device 100 in this case divides a turnback value by a predetermined quantization step to quantize the turnback value in step S301.

In step S302, the quantization unit 112 divides input data (a depth value wrapping around a predetermined value range) by a quantization step identical to the quantization step used by the quantization unit 111 for quantization, to quantize the input data.

In step S303, the DPCM processing unit 113 executes DPCM processing for the quantized input data derived in step S102, to derive a difference value (difference data) between a depth value of a current processing target pixel and a depth value of a processing target pixel one pixel before.

In step S304, the selection unit 117 selects a method for correcting the difference data, on the basis of the value of the difference data under control by the selection control unit 116.

In step S305, the selection control unit 116 determines whether or not to add the quantized turnback value to the difference data. In a case where the quantized turnback value is determined to be added to the difference data, i.e., in a case where the selection unit 117 selects addition of the quantized turnback value, the process proceeds to step S306.

In step S306, the arithmetic unit 114 adds the quantized turnback value derived in step S301 to the difference data derived in step S303. After completion of processing in step S306, the process proceeds to step S309.

On the other hand, in a case where the quantized turnback value is determined not to be added to the difference data in step S305, the process proceeds to step S307.

In step S307, the selection control unit 116 determines whether or not to subtract the quantized turnback value from the difference data. In a case where the quantized turnback value is determined to be subtracted from the difference data, i.e., in a case where the selection unit 117 selects subtraction of the quantized turnback value, the process proceeds to step S308.

In step S308, the arithmetic unit 115 subtracts the quantized turnback value derived in step S301, from the difference data derived in step S303. After completion of processing in step S308, the process proceeds to step S309.

On the other hand, in a case where the quantized turnback value is determined not to be subtracted from the difference data in step S307, i.e., in a case where correction of the difference data is determined to be omitted (skipped), the process proceeds to step S309.

In step S309, the coding unit 118 codes the appropriately corrected difference data in the above manner (the difference value derived in step S303, the addition result derived in step S306, or the subtraction result derived in step S308) to derive coded data.

After completion of processing in step S309, the coding process ends. The coding device 100 executes such a coding process for each of pixels (respective depth values) in a depth image.

In this manner, an increase in the coded difference value can be suppressed as described above. Accordingly, suppression of a drop of coding efficiency is achievable. Moreover, in this case, too, the depth value and the turnback value of the depth value are both quantized, and hence, an increase in the difference value can be more suppressed, so that further suppression of a drop of coding efficiency is achievable.

<5. Fourth embodiment>

<Decoding device>

Described with reference to FIG. 13 has been the method which derives a difference value, an addition result, and a subtraction result and selects the one falling within a value range of a depth value from among them, as a method for achieving appropriate correction of coefficient data with use of the decoding device 200. However, the method for achieving appropriate correction of coefficient data is not limited to this example and may be any methods. For example, the correction method may be selected on the basis of a value of coefficient data.

FIG. 18 depicts an example of a main configuration of the decoding device 200 in this case. The inverse DPCM processing unit 213 in this case supplies coefficient data derived by inverse DPCM processing to the correction unit 221 (the selection control unit 216 and the selection unit 217 of the correction unit 221).

The selection control unit 216 acquires coefficient data supplied from the inverse DPCM processing unit 213. The selection control unit 216 further acquires a quantized turnback value supplied from the quantization unit 211. The selection control unit 216 controls operation of the selection unit 217 on the basis of these values.

The selection unit 217 acquires the coefficient data supplied from the inverse DPCM processing unit 213. The selection unit 217 selects a method for correcting the coefficient data, on the basis of a value of the acquired coefficient data, under control by the selection control unit 216. Thereafter, the selection unit 217 supplies the coefficient data to a processing unit corresponding to the selection. For example, the selection unit 217 selects omission of correction of the coefficient data, addition of the quantized turnback value to the coefficient data, or subtraction of the quantized turnback value from the coefficient data, as the method for correcting the coefficient data. Thereafter, in a case where omission of correction of the coefficient data is selected, the selection unit 217 supplies the coefficient data to the inverse quantization unit 218. Alternatively, in a case where addition of the quantized turnback value is selected, the selection unit 217 supplies the coefficient data to the arithmetic unit 214. Further alternatively, in a case where subtraction of the quantized turnback value is selected, the selection unit 217 supplies the coefficient data to the arithmetic unit 215.

In the case where addition of the quantized turnback value is selected by the selection unit 217, the arithmetic unit 214 acquires the coefficient data supplied from the selection unit 217, and adds the quantized turnback value supplied from the quantization unit 211, to the acquired coefficient data. The arithmetic unit 214 supplies a correction result (an addition result as a sum of the coefficient data and the quantized turnback value) to the inverse quantization unit 218.

In the case where subtraction of the quantized turnback value is selected by the selection unit 217, the arithmetic unit 215 acquires the coefficient data supplied from the selection unit 217, and subtracts the quantized turnback value supplied from the quantization unit 211, from the acquired coefficient data. The arithmetic unit 215 supplies a correction result (a subtraction result as a difference between the coefficient data and the quantized turnback value) to the inverse quantization unit 218.

In the case where omission of correction of the coefficient data is selected by the selection unit 217, the inverse quantization unit 218 acquires the coefficient data supplied from the selection unit 217, and inversely quantizes the coefficient data by using a quantization step. Alternatively, in the case where addition of the quantized turnback value is selected by the selection unit 217, the inverse quantization unit 218 acquires the addition result as the sum of the coefficient data derived by the arithmetic unit 214 and the quantized turnback value, and inversely quantizes the addition result by using the quantization step. Further alternatively, in the case where subtraction of the quantized turnback value is selected by the selection unit 217, the inverse quantization unit 218 acquires the subtraction result as the difference between the coefficient data derived by the arithmetic unit 215 and the quantized turnback value, and inversely quantizes the subtraction result by using the quantization step.

The coefficient data appropriately corrected in the manner described above is a quantized depth value. In other words, the inverse quantization unit 218 inversely quantizes the appropriately corrected coefficient data to derive a depth value.

Note that this quantization step is set for each of any data units as with the case of FIG. 13. For example, the quantization step may be set for each of blocks (multiple pixels in a depth image). Moreover, the inverse quantization unit 218 shares the quantization step with the quantization unit 211 as with the case of FIG. 13. Specifically, the inverse quantization unit 218 inversely quantizes the coefficient data by using a quantization step identical to the quantization step of the quantization unit 211. In this manner, a correlation can be maintained between the turnback value and the depth value. For example, the inverse quantization unit 218 multiplies the appropriately corrected coefficient data by the quantization step to derive the depth value.

The inverse quantization unit 218 outputs the derived depth value to the outside of the decoding device 200 as output data.

By selecting the correction method on the basis of the value of the coefficient data as described above, an increase in the difference value can be suppressed. Accordingly, suppression of a drop of coding efficiency is achievable. Moreover, in this case, too, the turnback value of the depth value is quantized by the quantization step identical to the quantization step for inverse quantization of the coefficient data, and hence, an increase in the difference value can be more suppressed, so that further suppression of a drop of coding efficiency is achievable.

<Flow of decoding process>

An example of a flow of a decoding process in this case will be described with reference to a flowchart in FIG. 19.

At a start of the decoding process in this case, the quantization unit 211 of the decoding device 200 divides a turnback value by a predetermined quantization step to quantize the turnback value in step S401.

In step S402, the decoding unit 212 decodes coded data given as input data, to derive difference data.

In step S403, the inverse DPCM processing unit 213 executes inverse DPCM processing for the difference data derived in step S402, to derive coefficient data (decoded data) of a current processing target pixel.

In step S404, the selection unit 217 selects a method for correcting the coefficient data (decoded data), on the basis of a value of the coefficient data under control by the selection control unit 216.

In step S405, the selection control unit 216 determines whether or not to add the quantized turnback value to the coefficient data. In a case where the quantized turnback value is determined to be added to the coefficient data, i.e., in a case where the selection unit 217 selects addition of the quantized turnback value, the process proceeds to step S406.

In step S406, the arithmetic unit 214 adds the quantized turnback value derived in step S401, to the coefficient data (decoded data) derived in step S403. After completion of processing in step S406, the process proceeds to step S409.

On the other hand, in a case where the quantized turnback value is determined not to be added to the coefficient data in step S405, the process proceeds to step S407.

In step S407, the selection control unit 216 determines whether or not to subtract the quantized turnback value from the coefficient data. In a case where the quantized turnback value is determined to be subtracted from the coefficient data, i.e., in a case where the selection unit 217 selects subtraction of the quantized turnback value, the process proceeds to step S408.

In step S408, the arithmetic unit 215 subtracts the quantized turnback value derived in step S401, from the difference data derived in step S403. After completion of processing in step S408, the process proceeds to step S409.

On the other hand, in step S407, in a case where the quantized turnback value is determined not to be subtracted from the coefficient data, i.e., in a case where correction of the coefficient data is determined to be omitted (skipped), the process proceeds to step S409.

In step S409, the inverse quantization unit 218 inversely quantizes the coefficient data appropriately corrected in the manner described above (the coefficient data derived in step S403, the addition result derived in step S406, or the subtraction result derived in step S408), by using a quantization step identical to the quantization step used for quantization in step S401, to derive a depth value.

After completion of processing in step S409, the decoding device 200 executes such a decoding process for each of pixels (respective depth values) in a depth image.

In this manner, an increase in the difference value can be suppressed as described above. Accordingly, suppression of a drop of coding efficiency is achievable. Moreover, in this case, too, the turnback value of the depth value is quantized, and hence, an increase in the difference value can be more suppressed, so that further suppression of a drop of coding efficiency is achievable.

<6. Fifth embodiment>

<Distance measuring device>

FIG. 20 is a block diagram depicting an example of a main configuration of a distance measuring device. A distance measuring device 500 depicted in FIG. 20 measures a distance by using iToF combining multiple modulation frequencies. For example, the distance measuring device 500 derives a depth value by iToF using a low modulation frequency, derives a depth value by iToF using a high modulation frequency, and merges the depth values. In this manner, the distance measuring device 500 can improve distance measurement accuracy while suppressing a decrease of a distance measurable range.

Note that FIG. 20 depicts only main parts of processing units and data flows and therefore does not necessarily illustrate all processing units and data flows. Specifically, the distance measuring device 500 may include a processing unit not depicted as a block in FIG. 20, or a process or a data flow not indicated by an arrow or the like in FIG. 20.

As depicted in FIG. 20, the distance measuring device 500 includes a control unit 501, a light output unit 511, a detection unit 512, an iToF measuring unit 513, a RAM (Random Access Memory) 514, and a data merging unit 515. The iToF measuring unit 513 includes a depth value derivation unit 521 and a coding unit 522. The data merging unit 515 includes a decoding unit 531 and a merging unit 532.

The control unit 501 controls respective processing units of the distance measuring device 500. As depicted in FIG. 20, the distance measuring device 500 includes only one set of the light output unit 511, the detection unit 512, and the iToF measuring unit 513. The distance measuring device 500 operates this one set of the light output unit 511, the detection unit 512, and the iToF measuring unit 513 to achieve both iToF using the high modulation frequency and iToF using the low modulation frequency. Accordingly, the control unit 501 time-divides the one set of the light output unit 511, the detection unit 512, and the iToF measuring unit 513 to execute both iToF using the high modulation frequency and iToF using the low modulation frequency.

The light output unit 511 outputs light having a high modulation frequency (e.g., IR laser light) and light having a low modulation frequency (e.g., IR laser light) in a time-division manner.

The detection unit 512 detects reflection light of irradiation light applied from the light output unit 511. The detection unit 512 detects reflection light (reflection light having the high modulation frequency) at a timing corresponding to a timing when the light having the high modulation frequency is applied from the light output unit 511. The detection unit 512 further detects reflection light (reflection light having the low modulation frequency) at a timing corresponding to a timing when the light having the low modulation frequency is applied from the light output unit 511. The detection unit 512 supplies data of a result of the detection (data indicating light amounts received by respective pixels) to the iToF measuring unit 513 (the depth value derivation unit 521 of the iToF measuring unit 513).

The depth value derivation unit 521 derives a depth value to a subject on the basis of the detection result by using an indirect ToF method. The depth value derivation unit 521 achieves time-division derivation of a depth value by iToF using the light having the high modulation frequency and derivation of a depth value by iToF using the light having the low modulation frequency.

The merging unit 532 of the data merging unit 515 merges these depth values. For this merging, at least the depth value derived by iToF using the light having the high modulation frequency is stored in the RAM 514. Accordingly, the depth value derivation unit 521 supplies at least the depth value derived by iToF using the light having the high modulation frequency to the coding unit 522. In addition, in a case where the depth value derived by iToF using the light having the low modulation frequency is not to be stored in the RAM 514, the depth value derivation unit 521 supplies the depth value to the merging unit 532 of the data merging unit 515.

The coding unit 522 codes the depth value to generate coded data. The coding unit 522 supplies the coded data to the RAM 514 and causes the RAM 514 to store the coded data.

The RAM 514 stores the coded data supplied from the coding unit 522. Moreover, the RAM 514 supplies the stored coded data to the decoding unit 531, in response to a request from the decoding unit 531.

The decoding unit 531 of the data merging unit 515 reads the coded data stored in the RAM 514, and decodes the coded data to derive a depth value. The decoding unit 531 supplies the derived depth value to the merging unit 532.

The merging unit 532 acquires the depth value derived by iToF using the light having the high modulation frequency and the depth value derived by iToF using the light having the low modulation frequency, and merges these depth values. The merging unit 532 outputs the merged depth value.

The present technology is applicable to the distance measuring device 500 thus configured. For example, the coding device 100 described in the first embodiment or the third embodiment may be applied to the coding unit 522. In addition, the decoding device 200 described in the second embodiment or the fourth embodiment may be applied to the decoding unit 531.

In this manner, suppression of a drop of coding efficiency of coded data stored in the RAM 514 is achievable. As a result, an increase in a storage capacity of the RAM 514 can be suppressed. Accordingly, suppression of a cost increase, and also suppression of an increase of a circuit scale and power consumption are achievable.

<Flow of distance measuring process>

An example of a flow of a distance measuring process executed by the distance measuring device 500 will be described with reference to a flowchart in FIG. 21.

At a start of the distance measuring process, the control unit 501 sets a modulation frequency to a high frequency in step S501.

In step S502, the light output unit 511 applies light having the high modulation frequency. The detection unit 512 detects reflection light of the applied light.

In step S503, the depth value derivation unit 521 derives a depth value by iToF using light having the high modulation frequency.

In step S504, the coding unit 522 executes a coding process to code the depth value.

In step S505, the RAM 514 stores coded data derived in step S504.

In step S506, the control unit 501 sets the modulation frequency to a low frequency.

In step S507, the light output unit 511 applies light having the low modulation frequency. The detection unit 512 detects reflection light of the applied light.

In step S508, the depth value derivation unit 521 derives a depth value by iToF using light having the low modulation frequency.

In step S509, the decoding unit 531 reads the coded data stored in step S506. In step S510, the decoding unit 531 executes a decoding process to decode the read coded data.

In step S511, the merging unit 532 merges the depth value derived by iToF using the light having the high modulation frequency and the depth value derived by iToF using the light having the low modulation frequency.

In step S512, the control unit 501 determines whether or not to end the distance measuring process. In a case where the distance measuring process is determined not to be ended, the process returns to step S501 to repeat the processing from step S501 on down. On the other hand, in a case where the distance measuring process is determined to be ended in step S512, the distance measuring process ends.

The present technology is applicable to the distance measuring process described above. For example, the coding process described with reference to the flowchart in FIG. 12 or the coding process described with reference to the flowchart in FIG. 17 may be applied to the coding process in step S504. Moreover, the decoding process described with reference to the flowchart in FIG. 15 or the decoding process described with reference to the flowchart in FIG. 19 may be applied to the decoding process in step S510.

In this manner, suppression of a drop of coding efficiency of coded data stored in the RAM 514 is achievable. As a result, an increase in the storage capacity of the RAM 514 can be suppressed. Accordingly, suppression of a cost increase, and also suppression of an increase of a circuit scale and power consumption are achievable.

<7. Sixth embodiment>

<Parallelized configuration>

The distance measuring device may have multiple systems each performing iToF. For example, as depicted in FIG. 22, a configuration for derivation of a depth value by iToF using light having a high modulation frequency and a configuration for derivation of a depth value by iToF using light having a low modulation frequency may be different from each other.

<Distance measuring device>

FIG. 23 is a block diagram depicting an example of a main configuration of the distance measuring device in this case. As with the distance measuring device 500, a distance measuring device 600 depicted in FIG. 23 measures a distance by using iToF combining multiple modulation frequencies. For example, the distance measuring device 600 derives a depth value by iToF using a low modulation frequency, derives a depth value by iToF using a high modulation frequency, and merges the depth values. In this manner, the distance measuring device 600 can improve distance measurement accuracy while suppressing a decrease of a distance measurable range.

As depicted in FIG. 23, the distance measuring device 600 includes a high frequency distance measuring unit 601, a low frequency distance measuring unit 602, and a data merging unit 603. The high frequency distance measuring unit 601 derives a depth value by iToF using a high modulation frequency. The low frequency distance measuring unit 602 derives a depth value by iToF using a low modulation frequency. The data merging unit 603 acquires the depth value derived by the high frequency distance measuring unit 601 and the depth value derived by the low frequency distance measuring unit 602, and merges the depth values.

The high frequency distance measuring unit 601 includes a light output unit 611, a detection unit 612, and an iToF measuring unit 613. The iToF measuring unit 613 includes a depth value derivation unit 621 and a coding unit 622.

The light output unit 611 applies light (e.g., IR laser light) having a high modulation frequency. The detection unit 612 detects reflection light of the applied light and supplies data indicating a detection result to the iToF measuring unit 613 (the depth value derivation unit 621 of the iToF measuring unit 613).

The depth value derivation unit 621 derives a depth value to a subject on the basis of the data supplied from the detection unit 612 as the detection result, by using an indirect ToF method. In other words, the depth value derivation unit 621 derives a depth value by iToF using light having the high modulation frequency. The coding unit 622 codes the depth value derived by the depth value derivation unit 621. The coding unit 622 supplies the generated coded data (coded data of the depth value derived by iToF using the light having the high modulation frequency) to the data merging unit 603 (a decoding unit 651 of the data merging unit 603).

The low frequency distance measuring unit 602 includes a light output unit 631, a detection unit 632, and an iToF measuring unit 633. The iToF measuring unit 633 includes a depth value derivation unit 641 and a coding unit 642.

The light output unit 631 applies light (e.g., IR laser light) having a low modulation frequency. The detection unit 632 detects reflection light of the applied light and supplies data indicating a detection result to the iToF measuring unit 633 (the depth value derivation unit 641 of the iToF measuring unit 633).

The depth value derivation unit 641 derives a depth value to a subject on the basis of the data supplied from the detection unit 632 as the detection result, by using an indirect ToF method. In other words, the depth value derivation unit 641 derives a depth value by iToF using light having the low modulation frequency. The coding unit 642 codes the depth value derived by the depth value derivation unit 641. The coding unit 642 supplies the generated coded data (coded data of the depth value derived by iToF using the light having the low modulation frequency) to the data merging unit 603 (a decoding unit 652 of the data merging unit 603).

The data merging unit 603 includes the decoding unit 651, the decoding unit 652, and a merging unit 653.

The decoding unit 651 decodes the coded data supplied from the coding unit 622 to generate (restore) the depth value derived by iToF using the light having the high modulation frequency. The decoding unit 651 supplies the depth value to the merging unit 653.

The decoding unit 652 decodes the coded data supplied from the coding unit 642 to generate (restore) the depth value derived by iToF using the light having the low modulation frequency. The decoding unit 652 supplies the depth value to the merging unit 653.

The merging unit 653 merges the depth values supplied from the decoding unit 651 and the decoding unit 652. Specifically, the merging unit 653 merges the depth value derived by iToF using the light having the high modulation frequency and the depth value derived by iToF using the light having the low modulation frequency. The merging unit 653 outputs the merged depth value.

The present technology is applicable to the distance measuring device 600 thus configured. For example, the coding device 100 described in the first embodiment or the third embodiment may be applied to the coding unit 622. In addition, the decoding device 200 described in the second embodiment or the fourth embodiment may be applied to the decoding unit 651.

In this manner, a drop of coding efficiency of coded data transferred from the high frequency distance measuring unit 601 to the data merging unit 603 can be suppressed. Accordingly, an increase in a bandwidth necessary for transferring the depth value from the high frequency distance measuring unit 601 to the data merging unit 603 can be suppressed, and therefore, a cost increase can be suppressed. Moreover, suppression of an increase of a circuit scale and power consumption is achievable.

<Turnback value supply method>

Note that a turnback value may be supplied from the coding side to the decoding side as in an example depicted in FIG. 24. For example, a turnback value may be supplied from the coding unit 622 to the decoding unit 651. Moreover, a turnback value may be supplied from the coding unit 642 to the decoding unit 652.

Further, a turnback value may be supplied from a processing unit (e.g., host system controller 701) provided separately from the high frequency distance measuring unit 601 and the low frequency distance measuring unit 602 as in an example depicted in FIG. 25. For example, a turnback value may be supplied from the host system controller 701 to the coding unit 622 and the decoding unit 651. Moreover, a turnback value may be supplied from the host system controller 701 to the coding unit 642 and the decoding unit 652.

<Flow of distance measuring process>

An example of a flow of a distance measuring process executed by the distance measuring device 600 will be described with reference to a flowchart in FIG. 26.

At a start of the distance measuring process, the light output unit 611 of the high frequency distance measuring unit 601 applies light having a high modulation frequency in step S601. The detection unit 612 detects reflection light of the applied light.

In step S602, the depth value derivation unit 621 derives a depth value by iToF using light having the high modulation frequency.

In step S603, the coding unit 622 executes a coding process to code the depth value. In step S604, the coding unit 622 transfers the generated coded data (coded data of the depth value derived by iToF using the light having the high modulation frequency) to the decoding unit 651 of the data merging unit 603. The decoding unit 651 acquires the coded data.

In step S605, the decoding unit 651 executes a decoding process to decode the coded data and generate (restore) the depth value derived by iToF using the light having the high modulation frequency.

In step S606, the light output unit 631 of the low frequency distance measuring unit 602 applies light having a low modulation frequency. The detection unit 632 detects reflection light of the applied light.

In step S607, the depth value derivation unit 641 derives a depth value by iToF using light having the low modulation frequency.

In step S608, the coding unit 642 executes a coding process to code the depth value. In step S609, the coding unit 642 transfers the generated coded data (coded data of the depth value derived by iToF using the light having the low modulation frequency) to the decoding unit 652 of the data merging unit 603. The decoding unit 652 acquires the coded data.

In step S610, the decoding unit 652 executes a decoding process to decode the coded data and generate (restore) the depth value derived by iToF using the light having the low modulation frequency.

In step S611, the merging unit 653 merges the depth value that is derived by iToF using the light having the high modulation frequency and is generated in step S606, and the depth value that is derived by iToF using the light having the low modulation frequency and is generated in step S610.

In step S612, the merging unit 653 determines whether or not to end the distance measuring process. In a case where the distance measuring process is determined not to be ended, the process returns to step S601 to repeat the processing from step S601 on down. On the other hand, in a case where the distance measuring process is determined to be ended in step S612, the distance measuring process ends.

The present technology is applicable to the distance measuring process described above. For example, the coding process described with reference to the flowchart in FIG. 12 or the coding process described with reference to the flowchart in FIG. 17 may be applied to the coding process in step S603. Moreover, the decoding process described with reference to the flowchart in FIG. 15 or the decoding process described with reference to the flowchart in FIG. 19 may be applied to the decoding process in step S605.

In this manner, a drop of coding efficiency of coded data transferred from the high frequency distance measuring unit 601 to the data merging unit 603 can be suppressed. Accordingly, an increase in a bandwidth necessary for transferring the depth value from the high frequency distance measuring unit 601 to the data merging unit 603 can be suppressed, and therefore, a cost increase can be suppressed. Moreover, suppression of an increase of a circuit scale and power consumption is achievable.

<8. Supplementary notes>

<Use of three or more modulation frequencies>

While described above has been the example which uses iToF combining two types of modulation frequencies, i.e., a high frequency and a low frequency, as an example which uses iToF combining multiple modulation frequencies, combinations of frequencies are not limited to this example and may be any combinations. For example, iToF using three or more modulation frequencies may be applied.

In this case, it is only required that at least a depth value derived by iToF using light having a lowest modulation frequency does not wrap around. In other words, depth values derived by iToF using light having a modulation frequency higher than the lowest frequency may wrap around a corresponding value range (turnback value). Accordingly, a drop of coding efficiency of these depth values can be suppressed by applying the present technology.

<Prediction method>

While described above has been the example of DPCM (inverse DPCM) which designates data of a processing target pixel one pixel before as a predicted value, a prediction method is not limited to this example and may be any methods. For example, P2 prediction may be adopted as depicted in FIG. 27.

As depicted in A in FIG. 27, according to P2 prediction, a predicted value of a pixel value X of a processing target pixel as indicated in gray is derived using a pixel value A of a pixel located to the left of the processing target pixel, a pixel value B of a pixel located above the processing target pixel, and a pixel value C of a pixel located to the upper left of the processing target pixel. At this time, as depicted in B in FIG. 27, a prediction method is set on the basis of whether or not the pixel value C is larger than a value D and a value E. As depicted in A in FIG. 27, the smaller one of the pixel value A and the pixel value B is set to the value D, while the larger one of the pixel value A and the pixel value B is set to the value E. In addition, in a case where the pixel value C is smaller than the value D, the value E is designated as the predicted value of the pixel value X. Moreover, in a case where the pixel value C is equal to or larger than the value D but smaller than the value E, a value (A + B - C) is designated as the predicted value of the pixel value X. Furthermore, in a case where the pixel value C is equal to or larger than the value E, the value D is designated as the predicted value of the pixel value X.

Also in a case where such P2 prediction is applied, suppression of a drop of coding efficiency is achievable as with the case of DPCM described above.

Moreover, a mechanism for raising accuracy of data obtained by inverse quantization may be introduced by using refinement transferred in a bitstream.

<Computer>

A series of processes described above may be executed either by hardware or by software. In a case where the series of processes are executed by software, a program constituting the software is installed in a computer. Examples of the computer include a computer incorporated in dedicated hardware, and a computer capable of executing various functions under various programs installed in the computer, such as a general-purpose computer.

FIG. 28 is a block diagram depicting a configuration example of hardware of a computer executing the series of processes described above under a program.

A computer 900 depicted in FIG. 28 includes a CPU (Central Processing Unit) 901, a ROM (Read Only Memory) 902, and a RAM (Random Access Memory) 903 connected to one another via a bus 904.

An input/output interface 910 is further connected to the bus 904. An input unit 911, an output unit 912, a storage unit 913, a communication unit 914, and a drive 915 are connected to the input/output interface 910.

For example, the input unit 911 includes a keyboard, a mouse, a microphone, a touch panel, an input terminal, and others. For example, the output unit 912 includes a display, a speaker, an output terminal, and others. For example, the storage unit 913 includes a hard disk, a RAM disk, a non-volatile memory, and others. For example, the communication unit 914 includes a network interface. The drive 915 drives a removable medium 921 such as a magnetic disk, an optical disk, a magneto-optical disk, or a semiconductor memory.

According to the computer configured as described above, for example, the CPU 901 loads a program stored in the storage unit 913 into the RAM 903 via the input/output interface 910 and the bus 904, and executes the loaded program to perform the series of processes described above. Data and the like required when the CPU 901 executes various processes are also stored in the RAM 903 as necessary.

For example, the program executed by the computer is allowed to be recorded in the removable medium 921 as a package medium or the like and applied in this form. In this case, the program is allowed to be installed into the storage unit 913 via the input/output interface 910 from the removable medium 921 attached to the drive 915.

Moreover, the program is allowed to be provided via a wired or wireless transfer medium such as a local area network, the Internet, and digital satellite broadcasting. In this case, the program is allowed to be received by the communication unit 914 and installed into the storage unit 913.

Furthermore, the program is allowed to be installed in the ROM 902 or the storage unit 913 beforehand.

<Configuration to which present technology is applicable>

The present technology is applicable to any configuration. For example, the present technology is applicable to various types of electronic equipment.

Moreover, for example, the present technology may also be practiced as a partial configuration of a device, such as a processor (e.g., video processor) as a system LSI (Large Scale Integration) or the like, a module (e.g., video module) using multiple processors or the like, a unit (e.g., video unit) using multiple modules or the like, or a set (e.g., video set) as a unit to which other functions are added.

Further, for example, the present technology is applicable to a network system including multiple devices. For example, the present technology may be practiced as cloud computing where multiple devices share processes and perform the processes in cooperation with each other via a network.

Note that the system in the present specification refers to a set of multiple constituent elements (e.g., devices, modules (parts)) and does not require all constituent elements to be accommodated within an identical housing. Accordingly, both multiple devices accommodated in separate housings and connected via a network and one device which has multiple modules accommodated in one housing are defined as systems.

<Field/use to which present technology is applicable>

A system, a device, a processing unit, or the like to which the present technology is applied is available in any field such as traffics, medical treatment, crime prevention, agriculture, stock breeding, mining, beauty, plants, home appliances, meteorology, and natural surveillance. In addition, use application of them may be any use application.

<Others>

Embodiments according to the present technology are not limited to the embodiments described above and may be modified in various manners within a range not departing from the subject matters of the present technology.

For example, a configuration described as one device (or processing unit) may be divided into multiple devices (or processing units). Conversely, a configuration described as multiple devices (or processing units) may be united into one device (or processing unit). In addition, needless to say, a configuration other than the configurations described above may be added to each configuration of the devices (or processing units). Further, a part of a configuration of a certain device (or processing unit) may be included in a configuration of a different device (or different processing unit) if configurations or operations in the entire system are substantially the same.

In addition, for example, the program described above may be executed by any device. In this case, the device is only required to have a necessary function (e.g., function block) and be capable of acquiring necessary information.

Moreover, for example, respective steps included in one flowchart may be executed by one device or may be shared and executed by multiple devices. Further, in a case where multiple processes are included in one step, the multiple processes may be executed by one device or may be shared and executed by multiple devices. In other words, multiple processes included in one step may be executed as processes in multiple steps. Conversely, processes described as multiple steps may be collectively executed in one step.

In addition, for example, processes in steps describing the program executed by the computer may be executed in time series in the order described in the present specification, or may be executed in parallel or individually at a necessary timing such as an occasion when a call is made. In other words, processes in respective steps may be executed in an order different from the order described above as long as no contradiction is caused. Besides, the processes in the steps describing this program may be executed in parallel with processes of a different program or executed in combination with processes of a different program.

Moreover, for example, each of multiple techniques associated with the present technology may be independently practiced as a single technique as long as no contradiction is caused. Needless to say, any multiple techniques of the present technology may be combined and practiced. For example, a part or all of the present technology described in any of the embodiments may be combined and practiced with a part or all of the present technology described in a different one of the embodiments. Moreover, a part or all of any technique of the present technology described above may be combined and practiced in conjunction with a different technology not described above.

Note that the present technology can also adopt the following configurations.

(1) An information processing device including:

a first quantization unit that quantizes a depth value that wraps around a predetermined value range, by using a predetermined quantization step;

a difference value derivation unit that derives a difference value between the depth value quantized by the first quantization unit and a predicted value of the depth value;

a second quantization unit that quantizes a turnback value of the depth value by using the quantization step;

a correction unit that appropriately corrects, by using the turnback value quantized by the second quantization unit, the difference value derived by the difference value derivation unit; and

a coding unit that codes the difference value appropriately corrected by the correction unit.

(2) The information processing device according to (1), in which

the correction unit includes

an addition unit that adds the quantized turnback value to the difference value,

a subtraction unit that subtracts the quantized turnback value from the difference value, and

a selection unit that selects a minimum absolute value from among absolute values of the difference value, an addition result derived by the addition unit as a sum of the difference value and the quantized turnback value, and a subtraction result derived by the subtraction unit as a difference between the difference value and the quantized turnback value, and

the coding unit is configured to code the value selected by the selection unit from among the difference value, the addition result, and the subtraction result.

(3) The information processing device according to (1), in which

the correction unit includes

a selection unit that selects, on the basis of the difference value and the quantized turnback value, omission of correction of the difference value, addition of the quantized turnback value to the difference value, or subtraction of the quantized turnback value from the difference value,

an addition unit that adds the quantized turnback value to the difference value in a case where the selection unit selects addition of the quantized turnback value, and

a subtraction unit that subtracts the quantized turnback value from the difference value in a case where the selection unit selects subtraction of the quantized turnback value, and

the coding unit is configured to

code the difference value in a case where the selection unit selects omission of correction of the difference value,

code an addition result derived by the addition unit as a sum of the difference value and the quantized turnback value in a case where the selection unit selects addition of the quantized turnback value, and

code a subtraction result derived by the subtraction unit as a difference between the difference value and the quantized turnback value in a case where the selection unit selects subtraction of the quantized turnback value.

(4) The information processing device according to any of (1) through (3), in which

the first quantization unit quantizes the depth value by using the quantization step set for each block of the depth value, and

the second quantization unit quantizes the turnback value by using the quantization step set for each block of the depth value.

(5) The information processing device according to any of (1) through (4), in which the second quantization unit quantizes the turnback value supplied from a system controller provided outside the information processing device.

(6) The information processing device according to any of (1) through (5), in which the depth value indicates a distance to a subject and is derived for each of pixels by using an indirect ToF (Time-of-Flight) method.

(7) The information processing device according to (6), in which the depth value indicates a distance to the subject and is derived for each of the pixels by applying light having a modulation frequency whose distance measurable range is narrower than a range of possible values of the distance to the subject, and detecting reflection light of the applied light.

(8) The information processing device according to (7), in which the difference value derivation unit designates the depth value of a previous processing target pixel that is a pixel processed one pixel before, as the predicted value of a current processing target pixel that is a processing target pixel at present, and derives a difference value between the depth value of the current processing target pixel and the depth value of the previous processing target pixel.

(9) The information processing device according to any of (1) through (8), in which the coding unit causes a storage unit to store coded data derived by coding the difference value appropriately corrected by the correction unit.

(10) An information processing method including:

quantizing a depth value that wraps around a predetermined value range, by using a predetermined quantization step;

deriving a difference value between the quantized depth value and a predicted value of the depth value;

quantizing a turnback value of the depth value by using the quantization step;

appropriately correcting the derived difference value by using the quantized turnback value; and

coding the appropriately corrected difference value.

(11) An information processing device including:

a decoding unit that decodes coded data to derive a difference value between coefficient data associated with a depth value wrapping around a predetermined value range, and a predicted value of the coefficient data;

a coefficient data derivation unit that adds the predicted value to the difference value derived by the decoding unit, to derive the coefficient data;

a quantization unit that quantizes a turnback value of the depth value by using a predetermined quantization step;

a correction unit that appropriately corrects, by using the turnback value quantized by the quantization unit, the coefficient data derived by the coefficient data derivation unit; and

an inverse quantization unit that inversely quantizes, by using the quantization step, the coefficient data appropriately corrected by the correction unit, to derive the depth value.

(12) The information processing device according to (11), in which

the correction unit includes

an addition unit that adds the quantized turnback value to the coefficient data, a subtraction unit that subtracts the quantized turnback value from the coefficient data, and a selection unit that selects a value falling within the value range from among values of the coefficient data, an addition result derived by the addition unit as a sum of the coefficient data and the quantized turnback value, and a subtraction result derived by the subtraction unit as a difference between the coefficient data and the quantized turnback value, and

the inverse quantization unit is configured to inversely quantize the value selected by the selection unit from among the coefficient data, the addition result, and the subtraction result.

(13) The information processing device according to (11), in which

the correction unit includes

a selection unit that selects, on the basis of the coefficient data and the quantized turnback value, omission of correction of the coefficient data, addition of the quantized turnback value to the coefficient data, or subtraction of the quantized turnback value from the coefficient data, an addition unit that adds the quantized turnback value to the coefficient data in a case where the selection unit selects addition of the quantized turnback value, and a subtraction unit that subtracts the quantized turnback value from the coefficient data in a case where the selection unit selects subtraction of the quantized turnback value, and

the inverse quantization unit is configured to

inversely quantize the coefficient data in a case where the selection unit selects omission of correction of the coefficient data, inversely quantize an addition result derived by the addition unit as a sum of the coefficient data and the quantized turnback value in the case where the selection unit selects addition of the quantized turnback value, and

inversely quantize a subtraction result derived by the subtraction unit as a difference between the coefficient data and the quantized turnback value in the case where the selection unit selects subtraction of the quantized turnback value.

(14) The information processing device according to any of (11) through (13), in which

the quantization unit quantizes the turnback value by using the quantization step set for each block of the depth value, and

the inverse quantization unit inversely quantizes, by using the quantization step set for each block of the depth value, the coefficient data appropriately corrected by the correction unit.

(15) The information processing device according to any of (11) through (14), in which the quantization unit quantizes the turnback value supplied from a system controller provided outside the information processing device or from a coding unit having generated the coded data.

(16) The information processing device according to any of (11) through (15), in which the depth value indicates a distance to a subject and is derived for each of pixels by using an indirect ToF (Time-of-Flight) method.

(17) The information processing device according to (16), in which the depth value indicates a distance to the subject and is derived for each of the pixels by applying light having a modulation frequency whose distance measurable range is narrower than a range of possible values of the distance to the subject, and detecting reflection light of the applied light.

(18) The information processing device according to (17), in which the coefficient data derivation unit designates the coefficient data of a previous processing target pixel that is a pixel processed one pixel before, as the predicted value of a current processing target pixel that is a processing target pixel at present, and adds the depth value of the previous processing target pixel to the depth value of the current processing target pixel to derive the coefficient data.

(19) The information processing device according to any of (11) through (18), in which the decoding unit reads and decodes the coded data stored in a storage unit.

(20) An information processing method including:

decoding coded data to derive a difference value between coefficient data associated with a depth value wrapping around a predetermined value range, and a predicted value of the coefficient data;

adding the predicted value to the derived difference value to derive the coefficient data;

quantizing a turnback value of the depth value by using a predetermined quantization step;

appropriately correcting the derived coefficient data by using the quantized turnback value; and

inversely quantizing the appropriately corrected coefficient data by using the quantization step to derive the depth value.

[Reference Signs List]

| | |
|---|---|
| 100: | Coding device |
| 111, 112: | Quantization unit |
| 113: | DPCM processing unit |
| 114, 115: | Arithmetic unit |
| 116: | Selection control unit |
| 117: | Selection unit |
| 118: | Coding unit |
| 121: | Correction unit |
| 200: | Decoding device |
| 211: | Quantization unit |
| 212: | Decoding unit |
| 213: | Inverse DPCM processing unit |
| 214, 215: | Arithmetic unit |
| 216: | Selection control unit |
| 217: | Selection unit |
| 218: | Inverse quantization unit |
| 221: | Correction unit |
| 500: | Distance measuring device |
| 501: | Control unit |
| 511: | Light output unit |
| 512: | Detection unit |
| 513: | iToF measuring unit |
| 514: | RAM |
| 515: | Data merging unit |
| 521: | Depth value derivation unit |
| 522: | Coding unit |
| 531: | Decoding unit |
| 532: | Merging unit |
| 600: | Distance measuring device |
| 601: | High frequency distance measuring unit |
| 602: | Low frequency distance measuring unit |
| 603: | Data merging unit |
| 611: | Light output unit |
| 612: | Detection unit |
| 613: | iToF measuring unit |

621: Depth value derivation unit
622: Coding unit
631: Light output unit
632: Detection unit
633: iToF measuring unit
641: Depth value derivation unit
642: Coding unit
651: Decoding unit
652: Decoding unit
653: Merging unit
701: Host system controller
900: Computer

**Claims**

1.   An information processing device comprising:

a first quantization unit that quantizes a depth value that wraps around a predetermined value range, by using a predetermined quantization step;
a difference value derivation unit that derives a difference value between the depth value quantized by the first quantization unit and a predicted value of the depth value;
a second quantization unit that quantizes a turnback value of the depth value by using the quantization step;
a correction unit that appropriately corrects, by using the turnback value quantized by the second quantization unit, the difference value derived by the difference value derivation unit; and
a coding unit that codes the difference value appropriately corrected by the correction unit.

2.   The information processing device according to claim 1, wherein

the correction unit includes

an addition unit that adds the quantized turnback value to the difference value,
a subtraction unit that subtracts the quantized turnback value from the difference value, and
a selection unit that selects a minimum absolute value from among absolute values of the difference value, an addition result derived by the addition unit as a sum of the difference value and the quantized turnback value, and a subtraction result derived by the subtraction unit as a difference between the difference value and the quantized turnback value, and

the coding unit is configured to code the value selected by the selection unit from among the difference value, the addition result, and the subtraction result.

3.   The information processing device according to claim 1, wherein

the correction unit includes

a selection unit that selects, on a basis of the difference value and the quantized turnback value, omission of correction of the difference value, addition of the quantized turnback value to the difference value, or subtraction of the quantized turnback value from the difference value,
an addition unit that adds the quantized turnback value to the difference value in a case where the selection unit selects addition of the quantized turnback value, and
a subtraction unit that subtracts the quantized turnback value from the difference value in a case where the selection unit selects subtraction of the quantized turnback value, and

the coding unit is configured to

code the difference value in a case where the selection unit selects omission of correction of the difference value,
code an addition result derived by the addition unit as a sum of the difference value and the quantized turnback value in a case where the selection unit selects addition of the quantized turnback value, and
code a subtraction result derived by the subtraction unit as a difference between the difference value and the quantized turnback value in a case where the selection unit selects subtraction of the quantized turnback value.

4.   The information processing device according to claim 1, wherein

the first quantization unit quantizes the depth value by using the quantization step set for each block of the depth value, and
the second quantization unit quantizes the turnback value by using the quantization step set for each block of the depth value.

5.   The information processing device according to claim 1, wherein the second quantization unit quantizes the turnback value supplied from a system controller provided outside the information processing device.

**6.** The information processing device according to claim 1, wherein the depth value indicates a distance to a subject and is derived for each of pixels by using an indirect ToF (Time-of-Flight) method.

**7.** The information processing device according to claim 6, wherein the depth value indicates a distance to the subject and is derived for each of the pixels by applying light having a modulation frequency whose distance measurable range is narrower than a range of possible values of the distance to the subject, and detecting reflection light of the applied light.

**8.** The information processing device according to claim 7, wherein the difference value derivation unit designates the depth value of a previous processing target pixel that is a pixel processed one pixel before, as the predicted value of a current processing target pixel that is a processing target pixel at present, and derives a difference value between the depth value of the current processing target pixel and the depth value of the previous processing target pixel.

**9.** The information processing device according to claim 1, wherein the coding unit causes a storage unit to store coded data derived by coding the difference value appropriately corrected by the correction unit.

**10.** An information processing method comprising:

quantizing a depth value that wraps around a predetermined value range, by using a predetermined quantization step;
deriving a difference value between the quantized depth value and a predicted value of the depth value;
quantizing a turnback value of the depth value by using the quantization step;
appropriately correcting the derived difference value by using the quantized turnback value; and
coding the appropriately corrected difference value.

**11.** An information processing device comprising:

a decoding unit that decodes coded data to derive a difference value between coefficient data associated with a depth value wrapping around a predetermined value range, and a predicted value of the coefficient data;
a coefficient data derivation unit that adds the predicted value to the difference value derived by the decoding unit, to derive the coefficient data;
a quantization unit that quantizes a turnback value of the depth value by using a predetermined quantization step;
a correction unit that appropriately corrects, by using the turnback value quantized by the quantization unit, the coefficient data derived by the coefficient data derivation unit; and
an inverse quantization unit that inversely quantizes, by using the quantization step, the coefficient data appropriately corrected by the correction unit, to derive the depth value.

**12.** The information processing device according to claim 11, wherein

the correction unit includes

an addition unit that adds the quantized turnback value to the coefficient data,
a subtraction unit that subtracts the quantized turnback value from the coefficient data, and
a selection unit that selects a value falling within the value range from among values of the coefficient data, an addition result derived by the addition unit as a sum of the coefficient data and the quantized turnback value, and a subtraction result derived by the subtraction unit as a difference between the coefficient data and the quantized turnback value, and

the inverse quantization unit is configured to inversely quantize the value selected by the selection unit from among the coefficient data, the addition result, and the subtraction result.

**13.** The information processing device according to claim 11, wherein

the correction unit includes

a selection unit that selects, on a basis of the coefficient data and the quantized turnback value, omission of correction of the coefficient data, addition of the quantized turnback value to the coefficient data, or subtraction of the quantized turnback value from the coefficient data,
an addition unit that adds the quantized turnback value to the coefficient data in a case where the selection unit selects addition of the quantized turnback value, and
a subtraction unit that subtracts the quantized turnback value from the coefficient data in a case where the selection unit selects subtraction of the quantized turnback value, and

the inverse quantization unit is configured to

inversely quantize the coefficient data in a case where the selection unit selects omission of correction of the coefficient data, inversely quantize an addition result derived by the addition unit as a sum of the coefficient data and the quantized turnback value in the case where the selection unit selects addition of the quantized turnback value, and

inversely quantize a subtraction result derived by the subtraction unit as a difference between the coefficient data and the quantized turnback value in the case where the selection unit selects subtraction of the quantized turnback value.

14. The information processing device according to claim 11, wherein

the quantization unit quantizes the turnback value by using the quantization step set for each block of the depth value, and
the inverse quantization unit inversely quantizes, by using the quantization step set for each block of the depth value, the coefficient data appropriately corrected by the correction unit.

15. The information processing device according to claim 11, wherein the quantization unit quantizes the turnback value supplied from a system controller provided outside the information processing device or from a coding unit having generated the coded data.

16. The information processing device according to claim 11, wherein the depth value indicates a distance to a subject and is derived for each of pixels by using an indirect ToF (Time-of-Flight) method.

17. The information processing device according to claim 16, wherein the depth value indicates a distance to the subject and is derived for each of the pixels by applying light having a modulation frequency whose distance measurable range is narrower than a range of possible values of the distance to the subject, and detecting reflection light of the applied light.

18. The information processing device according to claim 17, wherein the coefficient data derivation unit designates the coefficient data of a previous processing target pixel that is a pixel processed one pixel before, as the predicted value of a current processing target pixel that is a processing target pixel at present, and adds the depth value of the previous processing target pixel to the depth value of the current processing target pixel to derive the coefficient data.

19. The information processing device according to claim 11, wherein the decoding unit reads and decodes the coded data stored in a storage unit.

20. An information processing method comprising:

decoding coded data to derive a difference value between coefficient data associated with a depth value wrapping around a predetermined value range, and a predicted value of the coefficient data;
adding the predicted value to the derived difference value to derive the coefficient data;
quantizing a turnback value of the depth value by using a predetermined quantization step;
appropriately correcting the derived coefficient data by using the quantized turnback value; and
inversely quantizing the appropriately corrected coefficient data by using the quantization step to derive the depth value.

# FIG.1

EP 4 300 038 A1

# FIG.2

# FIG.3

EP 4 300 038 A1

# F I G . 4

EP 4 300 038 A1

# FIG.5

target object

CYCLE $f_{mL}$

IR Laser$_L$
Photo Diode$_L$

MEASURING DISTANCE: LONG

PHASE DIFFERENCE $\varphi_L$

CYCLE $f_{mH}$

IR Laser$_H$
Photo Diode$_H$

HIGH ACCURACY

PHASE DIFFERENCE $\varphi_H$

MEASURABLE $\phi_L, \phi_H : 0 < \phi_L, \phi_H < 2\pi$

DISTANCE $\quad d = \dfrac{1}{2} \cdot \dfrac{c}{f_{mL}} \cdot \dfrac{\phi_L}{2\pi} \qquad d - \dfrac{1}{2} \cdot \dfrac{c}{f_{mH}} \cdot n = \dfrac{1}{2} \cdot \dfrac{c}{f_{mH}} \cdot \dfrac{\phi_H}{2\pi}$

EP 4 300 038 A1

# FIG.6

MEASURING DISTANCE: LONG

CYCLE $f_{mL}$

target object

IR Laser$_L$

Photo Diode$_L$

PHASE DIFFERENCE $\varphi_L$

CHANGE MODULATION FREQUENCY WITH TIME DIVISION

HIGH ACCURACY

CYCLE $f_{mH}$

PHASE DIFFERENCE $\varphi_H$

EP 4 300 038 A1

# F I G . 7

## MODULATION FREQUENCY: Low

MEASURED VALUE

ACTUAL DISTANCE

A

## MODULATION FREQUENCY: High

MEASURED VALUE

ACTUAL DISTANCE

B

A

B

C

EP 4 300 038 A1

# FIG.9

EP 4 300 038 A1

F I G . 1 0

# F I G . 1 1

| | | | | | | | | |
|---|---|---|---|---|---|---|---|---|
| QUANTIZATION STEP | 10 | | | | 10 | | | |
| QUANTIZED TURNBACK VALUE | 150 | | | | 150 | | | |
| QUANTIZED INPUT DATA | 149 | 0 | 1 | 2 | 2 | 1 | 0 | 149 |
| INPUT DATA WITH NO-TURNBACK | 149 | 150 | 151 | 152 | 152 | 151 | 150 | 159 |
| [1] DIFFERENCE DATA | | −149 | 1 | 1 | | −1 | −1 | 149 |
| [2] [1] + QUANTIZED TURNBACK VALUE (150) | | 1 | 151 | 151 | | 149 | 149 | 299 |
| [3] [1] − QUANTIZED TURNBACK VALUE (150) | | −259 | −149 | −149 | | −151 | −151 | −1 |
| VALUE SELECTED AS CODE (MINIMUM ABSOLUTE VALUE IN [1], [2], [3]) | | 1 | 1 | 1 | | −1 | −1 | −1 |

# FIG.12

```
        ╭─────────────────────────────╮
        │     CODING PROCESS START    │
        ╰─────────────────────────────╯
                      │
                      ▼
   ┌────────────────────────────────────────┐
   │       QUANTIZE TURNBACK VALUE          │ S101
   └────────────────────────────────────────┘
                      │
                      ▼
   ┌────────────────────────────────────────┐
   │        QUANTIZE INPUT DATA             │ S102
   └────────────────────────────────────────┘
                      │
                      ▼
   ┌────────────────────────────────────────┐
   │          EXECUTE DPCM FOR              │ S103
   │        QUANTIZED INPUT DATA            │
   └────────────────────────────────────────┘
                      │
                      ▼
   ┌────────────────────────────────────────┐
   │    ADD QUANTIZED TURNBACK VALUE        │ S104
   │        TO DIFFERENCE DATA              │
   └────────────────────────────────────────┘
                      │
                      ▼
   ┌────────────────────────────────────────┐
   │   SUBTRACT QUANTIZED TURNBACK VALUE    │ S105
   │        FROM DIFFERENCE DATA            │
   └────────────────────────────────────────┘
                      │
                      ▼
   ┌──────────────────────────────────────────────────────┐
   │ SELECT DIFFERENCE DATA HAVING MINIMUM ABSOLUTE VALUE │ S106
   └──────────────────────────────────────────────────────┘
                      │
                      ▼
   ┌────────────────────────────────────────┐
   │     CODE SELECTED DIFFERENCE DATA      │ S107
   └────────────────────────────────────────┘
                      │
                      ▼
              ╭──────────────╮
              │     END      │
              ╰──────────────╯
```

# F I G . 1 3

EP 4 300 038 A1

# F I G . 1 4

| QUANTIZATION STEP | 10 | | | | 10 | | | |
|---|---|---|---|---|---|---|---|---|
| QUANTIZED TURNBACK VALUE | 150 | | | | 150 | | | |
| DIFFERENCE DATA (DECODED CODED DATA) | ◹ | 1 | 1 | 1 | ◹ | −1 | −1 | −1 |

SEPARATELY TRANSFER BY PCM OR THE LIKE        SEPARATELY TRANSFER BY PCM OR THE LIKE

| | | | | | | | | |
|---|---|---|---|---|---|---|---|---|
| DECODED DATA (DIFFERENCE DATA SUBJECTED TO INVERSE DPCM) | 149 | 150 | 1 | 2 | 2 | 1 | 0 | −1 |
| CORRECT DATA OUT OF VALUE RANGE BY QUANTIZED TURNBACK VALUE (150) | 149 | 0 | 1 | 2 | 2 | 1 | 0 | 149 |
| OUTPUT DATA (INVERSELY QUANTIZED DECODED DATA AFTER CORRECTION) | 1490 | 0 | 10 | 20 | 20 | 10 | 0 | 1490 |

EP 4 300 038 A1

# FIG.15

```
        ┌─────────────────────────────┐
        │   DECODING PROCESS START    │
        └─────────────────────────────┘
                      │
                      ▼
   ┌───────────────────────────────────────┐ S201
   │        QUANTIZE TURNBACK VALUE        │
   └───────────────────────────────────────┘
                      │
                      ▼
   ┌───────────────────────────────────────┐ S202
   │           DECODE CODED DATA           │
   └───────────────────────────────────────┘
                      │
                      ▼
   ┌───────────────────────────────────────┐ S203
   │  EXECUTE INVERSE DPCM FOR DIFFERENCE DATA │
   └───────────────────────────────────────┘
                      │
                      ▼
   ┌───────────────────────────────────────┐ S204
   │      ADD QUANTIZED TURNBACK VALUE     │
   │           TO DECODED DATA             │
   └───────────────────────────────────────┘
                      │
                      ▼
   ┌───────────────────────────────────────┐ S205
   │   SUBTRACT QUANTIZED TURNBACK VALUE   │
   │          FROM DECODED DATA            │
   └───────────────────────────────────────┘
                      │
                      ▼
   ┌───────────────────────────────────────┐ S206
   │ SELECT DECODED DATA FALLING WITHIN VALUE RANGE │
   └───────────────────────────────────────┘
                      │
                      ▼
   ┌───────────────────────────────────────┐ S207
   │ INVERSELY QUANTIZE SELECTED DECODED DATA │
   └───────────────────────────────────────┘
                      │
                      ▼
        ┌─────────────────────────────┐
        │            END              │
        └─────────────────────────────┘
```

# FIG.16

EP 4 300 038 A1

# FIG.17

```
CODING PROCESS START
```

QUANTIZE TURNBACK VALUE  S301

QUANTIZE INPUT DATA  S302

EXECUTE DPCM FOR
QUANTIZED INPUT DATA  S303

SELECT CORRECTION METHOD ON
BASIS OF VALUE OF DIFFERENCE DATA  S304

IS QUANTIZED TURNBACK
VALUE TO BE ADDED?  S305

YES →

NO ↓

ADD QUANTIZED TURNBACK
VALUE TO DIFFERENCE DATA  S306

IS QUANTIZED TURNBACK
VALUE TO BE SUBTRACTED?  S307

YES →

NO ↓

SUBTRACT QUANTIZED TURNBACK
VALUE FROM DIFFERENCE DATA  S308

CODE DIFFERENCE DATA  S309

```
END
```

# F I G . 1 8

EP 4 300 038 A1

# FIG.19

```
   ( DECODING PROCESS START )
              │
              ▼
  ┌──────────────────────────┐
  │  QUANTIZE TURNBACK VALUE │  S401
  └──────────────────────────┘
              │
              ▼
  ┌──────────────────────────┐
  │     DECODE CODED DATA     │  S402
  └──────────────────────────┘
              │
              ▼
  ┌──────────────────────────┐
  │    EXECUTE INVERSE DPCM   │  S403
  │    FOR DIFFERENCE DATA    │
  └──────────────────────────┘
              │
              ▼
  ┌──────────────────────────┐
  │  SELECT CORRECTION METHOD ON │  S404
  │  BASIS OF VALUE OF DECODED DATA │
  └──────────────────────────┘
              │
              ▼
     IS QUANTIZED TURNBACK        S405
     VALUE TO BE ADDED?           YES ──┐
              │ NO                       │
              │                          ▼
              │              ┌──────────────────────────┐  S406
              │              │   ADD QUANTIZED TURNBACK  │
              │              │   VALUE TO DECODED DATA    │
              │              └──────────────────────────┘
              ▼                          │
     IS QUANTIZED TURNBACK        S407    │
     VALUE TO BE SUBTRACTED?      YES ──┐ │
              │ NO                       │ │
              │                          ▼ │
              │              ┌──────────────────────────┐  S408
              │              │ SUBTRACT QUANTIZED TURNBACK│
              │              │  VALUE FROM DECODED DATA   │
              │              └──────────────────────────┘
              │                          │
              ▼◄─────────────────────────┘
  ┌──────────────────────────┐
  │ INVERSELY QUANTIZE DECODED DATA │  S409
  └──────────────────────────┘
              │
              ▼
          ( END )
```

# FIG. 20

CONTROL UNIT ~501

LIGHT OUTPUT UNIT — 511
DETECTION UNIT — 512

iToF MEASURING UNIT — 513
DEPTH VALUE DERIVATION UNIT — 512
CODING UNIT — 522

DATA MERGING UNIT — 515
MERGING UNIT — 532
DECODING UNIT — 531

RAM — 514

500

EP 4 300 038 A1

# FIG.21

```
( DISTANCE MEASURING PROCESS START )
                    │
                    ▼
SET MODULATION FREQUENCY TO HIGH FREQUENCY   S501
                    │
                    ▼
APPLY LIGHT AND DETECT REFLECTION LIGHT      S502
                    │
                    ▼
DERIVE DEPTH VALUE                           S503
                    │
                    ▼
CODE DEPTH VALUE                             S504
                    │
                    ▼
STORE CODED DATA                             S505
                    │
                    ▼
SET MODULATION FREQUENCY TO LOW FREQUENCY    S506
                    │
                    ▼
APPLY LIGHT AND DETECT REFLECTION LIGHT      S507
                    │
                    ▼
DERIVE DEPTH VALUE                           S508
                    │
                    ▼
READ CODED DATA                              S509
                    │
                    ▼
DECODE CODED DATA                            S510
                    │
                    ▼
MERGE DEPTH VALUES                           S511
                    │
                    ▼
NO          < END? >                         S512
                    │ YES
                    ▼
                ( END )
```

# FIG.22

MEASURING DISTANCE: LONG

CYCLE $f_{mL}$

target object

PHASE DIFFERENCE $\varphi_L$

IR Laser$_L$

Photo Diode$_L$

HIGH ACCURACY

CYCLE $f_{mH}$

PHASE DIFFERENCE $\varphi_H$

IR Laser$_H$

Photo Diode$_H$

MERGE

EP 4 300 038 A1

# FIG.23

EP 4 300 038 A1

# FIG.24

EP 4 300 038 A1

# FIG.25

HOST SYSTEM CONTROLLER ~701

TURNBACK VALUE

601~ HIGH FREQUENCY DISTANCE MEASURING UNIT

CODING UNIT

622

DATA MERGING UNIT

DECODING UNIT

651

CODED DATA

602~ LOW FREQUENCY DISTANCE MEASURING UNIT

CODING UNIT

642

652

DECODING UNIT

CODED DATA

~603

600

EP 4 300 038 A1

# FIG.26

```
( DISTANCE MEASURING PROCESS START )
                    ↓
APPLY HIGH-FREQUENCY LIGHT AND DETECT REFLECTION LIGHT   S601
                    ↓
           DERIVE DEPTH VALUE                            S602
                    ↓
           CODE DEPTH VALUE                              S603
                    ↓
          TRANSFER CODED DATA                            S604
                    ↓
           DECODE CODED DATA                             S605
                    ↓
APPLY LOW-FREQUENCY LIGHT AND DETECT REFLECTION LIGHT    S606
                    ↓
           DERIVE DEPTH VALUE                            S607
                    ↓
           CODE DEPTH VALUE                              S608
                    ↓
          TRANSFER CODED DATA                            S609
                    ↓
           DECODE CODED DATA                             S610
                    ↓
          MERGE DEPTH VALUES                             S611
                    ↓
    NO  <       END?       >   S612
                    ↓ YES
               ( END )
```

# FIG.27

EP 4 300 038 A1

# FIG.28

EP 4 300 038 A1

## INTERNATIONAL SEARCH REPORT

| International application No. |
| --- |
| **PCT/JP2022/000817** |

### A. CLASSIFICATION OF SUBJECT MATTER

*G01C 3/06*(2006.01)i; *H04N 19/597*(2014.01)i; *H04N 19/94*(2014.01)i; *G01S 7/4915*(2020.01)i

FI:   G01C3/06 120Q; H04N19/597; H04N19/94; G01S7/4915

According to International Patent Classification (IPC) or to both national classification and IPC

### B. FIELDS SEARCHED

Minimum documentation searched (classification system followed by classification symbols)

G01S7/48-7/51; G01S17/00-17/95; G01C3/06; H04N19/597; H04N19/94;

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2021/003003 A1 (MICROSOFT TECHNOLOGY LICENSING, LLC) 07 January 2021 (2021-01-07)<br>entire text, all drawings | 1-20 |
| A | JP 2018-513967 A (CORNELL UNIVERSITY) 31 May 2018 (2018-05-31)<br>entire text, all drawings | 1-20 |
| A | US 2009/0141262 A1 (ROTHMAN, Johan et al.) 04 June 2009 (2009-06-04)<br>entire text, all drawings | 1-20 |
| A | JP 2005-129972 A (NEC ENGINEERING LTD) 19 May 2005 (2005-05-19)<br>entire text, all drawings | 1-20 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 February 2022** | **08 March 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/000817**

| Patent document cited in search report | | | Publication date (day/month/year) | Patent family member(s) | | | Publication date (day/month/year) |
|---|---|---|---|---|---|---|---|
| WO | 2021/003003 | A1 | 07 January 2021 | US | 2021/0174474 | A1 | |
| JP | 2018-513967 | A | 31 May 2018 | US | 2020/0191967 | A1 | |
| US | 2009/0141262 | A1 | 04 June 2009 | FR | 2923314 | A1 | |
| JP | 2005-129972 | A | 19 May 2005 | (Family: none) | | | |

Form PCT/ISA/210 (patent family annex) (January 2015)

**REFERENCES CITED IN THE DESCRIPTION**

**Patent documents cited in the description**

- JP 6045123 B

- JP 2002344477 A

**Non-patent literature cited in the description**

- **KEITA YASUTOMI ; SHOJI KAWAHITO.** Technical Description Time-of-Flight Camera. *The Journal of the Institute of Image Information and Television Engineers,* 29 August 2016, vol. 70 (11), 880-885